# EUROPEAN PATENT SPECIFICATION

(11) **EP 4 596 172 B1**
(45) Date of publication and mention of the grant of the patent: **04.11.2026**
(21) Application number: 22967093.0
(22) Date of filing: 29.11.2022
(51) Int. Cl.: B23Q 17/00, B23B 31/00, B23Q 3/157, B23Q 17/12, G01M 1/28, G01M 7/00, G01M 13/00, G05B 19/406

(54) **MACHINE TOOL, DIAGNOSTIC TOOL, AND METHOD FOR DIAGNOSING MACHINE TOOL**
WERKZEUGMASCHINE, DIAGNOSEWERKZEUG UND VERFAHREN ZUR DIAGNOSE EINER WERKZEUGMASCHINE
MACHINE-OUTIL, OUTIL DE DIAGNOSTIC ET PROCÉDÉ DE DIAGNOSTIC DE MACHINE-OUTIL

(43) Date of publication of application: 06.08.2025
(73) Proprietor: Yamazaki Mazak Corporation, Niwa-gun, Aichi 480-0197 (JP)
(72) Inventor: NAGASAKA, Satoshi, Niwa-gun, Aichi 480-0197 (JP); MORI, Yoshinori, Niwa-gun, Aichi 480-0197 (JP); HORIBE, Kazuya, Niwa-gun, Aichi 480-0197 (JP); YAMAMOTO, Hiromasa, Niwa-gun, Aichi 480-0197 (JP); ITO, Masatoshi, Niwa-gun, Aichi 480-0197 (JP); YATSU, Yuya, Niwa-gun, Aichi 480-0197 (JP)
(74) Representative: TBK
(86) International application number: PCT/JP2022/043881
(87) International publication number: WO 2024/116258

(56) References cited:
- WO-A2-2005/084358
- JP-A- 2000 280 140
- JP-A- 2001 153 758
- JP-A- 2001 153 758
- JP-A- 2002 331 442
- JP-A- 2018 087 749
- JP-A- 2018 103 286
- JP-A- 2021 023 999
- JP-A- 2022 021 237
- JP-A- 2022 148 054
- US-A1- 2008 011 091
- US-A1- 2019 107 461
- US-A1- 2020 147 737
- US-A1- 2021 031 323

## Description

### Technical Field

The present invention relates to a machine tool and a diagnostic method for the machine tool.

### Background Art

A technique for diagnosing a machine tool is known.

As related techniques, document JP 2001-153758 A discloses a tool for spindle testing. The tool for spindle testing illustrated in document JP 2001-153758 A includes a dummy tool detachably attached to a spindle of a machine tool. In addition, the dummy tool includes a hammer for beating the dummy tool, a mechanism for driving the hammer, and a detector for detecting vibration of the dummy tool.

Document US 2020/147737 A1 discloses a tool attachment abnormality detection device which acquires data associated with a machining center, performs pre-processing to create data regarding at least chronological data of a vibration or sound that has been generated in a tool change when a tool has been attached to a tool magazine, where the data is created based on the data that has been acquired, and detects an abnormality in attachment of the tool to the tool magazine based on the data created in the pre-processing stage.

Document US 2021/031323 A1 discloses a tool-mounting-state estimation system which includes: a measuring tool including a body section having a tapered external surface common with a tapered external surface of a tool and a vibrating source that is mounted on the body section and that generates vibration; a sensor that is provided on a spindle for drawing the measuring tool thereinto so that the tapered external surface of the measuring tool comes into close contact with a tapered internal surface of the spindle and that detects the vibration generated by the vibrating source when the vibration propagates towards the spindle via the tapered external surface and the tapered internal surface; and an estimation unit for estimating a mounting state of the tool on the basis of the vibration detected by sensor.

Document US 2008/011091 A1 discloses a method for measuring loading and temperature in structures and materials by measuring changes in natural frequencies.. A resonance force sensor represents a strain-pressure sensor for structural load measurement, structural health monitoring, fluid and gas line pressure measurement, batch process manufacturing, and other force-sensing applications. When a complex structure, e.g. an aircraft or ground vehicle structure, is so instrumented, a sensory component for on-board vehicular weight and balance system is provided.

Document WO 2005/084358 A2 discloses a device for use in detecting structural damage which comprises at least one piezoelectric wafer including a sensor, and an actuator in-plane with the sensor. At least one of the sensor and the actuator at least partially surrounds the other of the sensor and the actuator such that the piezoelectric wafer provides radial detection of structural occurrences in a material.

Document JP 2022 148054 A discloses a method for detecting a mounting state of a tool holder, and a machine tool mounted with the tool holder. The machine tool includes an automatic tool changer. In the machine tool, a displacement sensor that detects a distance between a tool holder attached to a main shaft in a replaceable manner and the main shaft is provided near the main shaft. The machine tool further includes: an operation unit that converts and creates data on a change in a distance with an outer circumferential part of the tool holder detected by the displacement sensor into a histogram for each axial direction of the main shaft; a preprocessing unit that creates a histogram group having histograms of a normal mounting state and at least one abnormal mounting state regarding the main shaft and the tool holder, and stores the histogram group as master data; and a determination unit that determines as normal or abnormal on the mounting state indicated by the histogram created by the operation unit on the basis of the master data stored in the preprocessing unit.

### Summary of Invention

### Technical Problem

It is an object of the present invention to provide a machine tool and a diagnostic method for a machine tool, which are capable of detecting an abnormality in the machine tool promptly.

### Solution to Problem

This object is achieved by a machine tool according to claim 1, and a diagnostic method for a machine tool according to claim 10. Advantageous further developments are as set forth in the dependent claims.

### Effects of Invention

According to the present invention, it becomes possible to provide a machine tool and a diagnostic method for the machine tool, which are capable of detecting an abnormality in the machine tool promptly.

### Brief Description of Drawings

[FIG. 1] FIG. 1 is a diagram of a machine tool according to an example not covered by the claims, schematically illustrating part of the machine tool.
[FIG. 2] FIG. 2 is a schematic illustration of a state in which a tool is attached to a tool spindle.
[FIG. 3] FIG. 3 is a schematic illustration of a state in which a diagnostic tool is attached to the tool spindle.
[FIG. 4] FIG. 4 is a diagram of the machine tool according to the example not covered by the claims, schematically illustrating part of the machine tool.
[FIG. 5] FIG. 5 is a diagram of the machine tool according to the example not covered by the claims, schematically illustrating part of the machine tool.
[FIG. 6] FIG. 6 is a schematic illustration of a state in which a diagnostic apparatus diagnoses presence or absence of an abnormality in the machine tool, based on data.
[FIG. 7] FIG. 7 is a diagram of the diagnostic tool according to the example not covered by the claims, schematically illustrating the diagnostic tool.
[FIG. 8] FIG. 8 is a flowchart of an example of a diagnostic method for the machine tool according to the example not covered by the claims.
[FIG. 9] FIG. 9 is a diagram of the machine tool according to the example not covered by the claims, schematically illustrating part of the machine tool.
[FIG. 10] FIG. 10 is a diagram of the machine tool according to the example not covered by the claims, schematically illustrating part of the machine tool.
[FIG. 11] FIG. 11 is a diagram of a machine tool according to an embodiment, schematically illustrating the machine tool.
[FIG. 12] FIG. 12 is a diagram of the machine tool according to the embodiment, schematically illustrating the machine tool.
[FIG. 13] FIG. 13 is a diagram of the diagnostic tool according to the embodiment, schematically illustrating the diagnostic tool.
[FIG. 14] FIG. 14 is a block diagram of a hardware configuration of the diagnostic apparatus, illustrating an example of the hardware configuration.
[FIG. 15] FIG. 15 is a diagram of the machine tool according to the embodiment, schematically illustrating part of the machine tool.
[FIG. 16] FIG. 16 is a diagram of the machine tool according to the embodiment, schematically illustrating part of the machine tool.
[FIG. 17] FIG. 17 is a schematic illustration of a state in which the diagnostic apparatus diagnoses presence or absence of an abnormality in the machine tool, based on first data.
[FIG. 18] FIG. 18 is a diagram of the machine tool according to the embodiment, schematically illustrating part of the machine tool.
[FIG. 19] FIG. 19 is a diagram of the machine tool according to the embodiment, schematically illustrating part of the machine tool.
[FIG. 20] FIG. 20 is a schematic illustration of a state in which the diagnostic apparatus diagnoses the presence or absence of the abnormality in the machine tool, based on the first data.
[FIG. 21] FIG. 21 is a diagram of data acquired by a sensor, schematically illustrating an example of the data.
[FIG. 22] FIG. 22 is a graph obtained by frequency analysis of vibration that acts on the diagnostic tool, schematically illustrating an example of the graph.
[FIG. 23] FIG. 23 is a graph obtained by the frequency analysis of the vibration that acts on the diagnostic tool, schematically illustrating an example of the graph.
[FIG. 24] FIG. 24 is a diagram of the machine tool according to the embodiment, schematically illustrating part of the machine tool.
[FIG. 25] FIG. 25 is a diagram of the machine tool according to the embodiment, schematically illustrating part of the machine tool.
[FIG. 26] FIG. 26 is a diagram of the machine tool according to the embodiment, schematically illustrating part of the machine tool.
[FIG. 27] FIG. 27 is a diagram of the machine tool according to the embodiment, schematically illustrating part of the machine tool.
[FIG. 28] FIG. 28 is a diagram of the machine tool according to the embodiment, schematically illustrating part of the machine tool.
[FIG. 29] FIG. 29 is a diagram of the machine tool according to the embodiment, schematically illustrating part of the machine tool.
[FIG. 30] FIG. 30 is a diagram of the machine tool according to the embodiment, schematically illustrating part of the machine tool.
[FIG. 31] FIG. 31 is a diagram of the machine tool according to the embodiment, schematically illustrating part of the machine tool.
[FIG. 32] FIG. 32 is a schematic illustration of a state in which the diagnostic apparatus diagnoses the presence or absence of the abnormality in the machine tool, based on second data.
[FIG. 33] FIG. 33 is a diagram of an image displayed on a display device, schematically illustrating an example of the image.
[FIG. 34] FIG. 34 is a diagram of an image displayed on the display device, schematically illustrating an example of the image.
[FIG. 35] FIG. 35 is a diagram of an image displayed on the display device, schematically illustrating an example of the image.
[FIG. 36] FIG. 36 is a schematic illustration of a state in which the diagnostic apparatus and a controller are communicably connected with each other.
[FIG. 37] FIG. 37 is a flowchart of an example of a diagnostic method for the machine tool according to the embodiment.

### Description of Embodiments

Hereinafter, a machine tool 100, a diagnostic tool 9, and a diagnostic method for the machine tool according to embodiments will be described with reference to the drawings. It is to be noted that in the description of the following embodiments, portions and members having the same function are denoted by the same reference numerals, and the repeated descriptions will be omitted for the portions and members having the same reference numerals.

### (Example not covered by the claims)

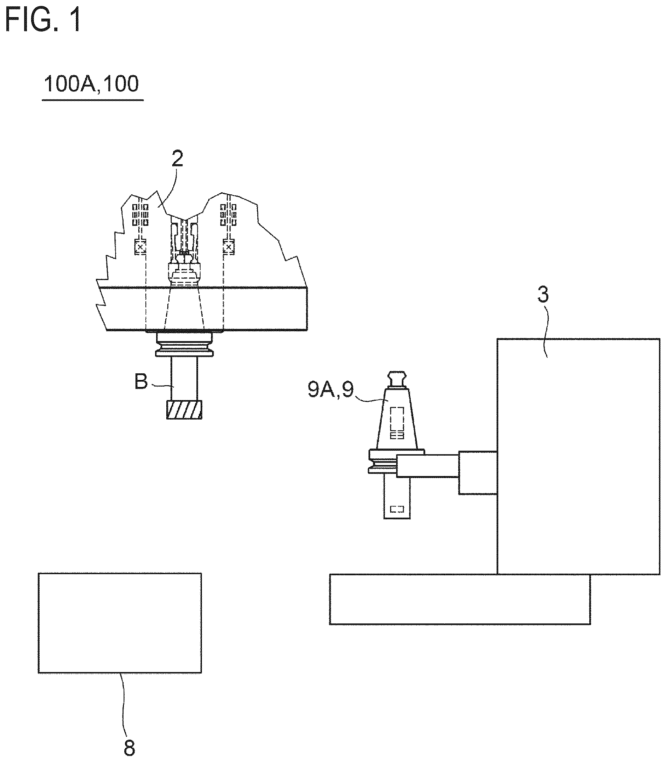

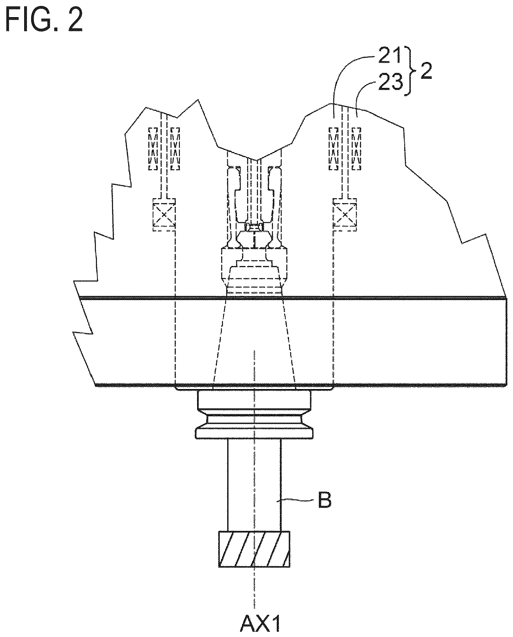

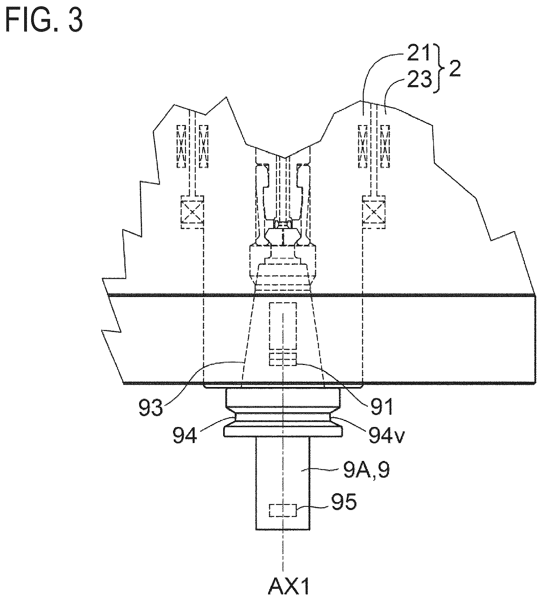

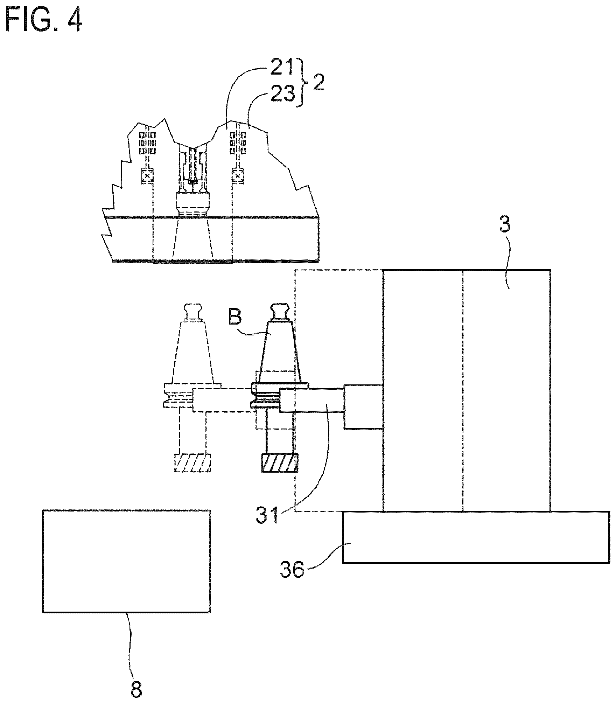

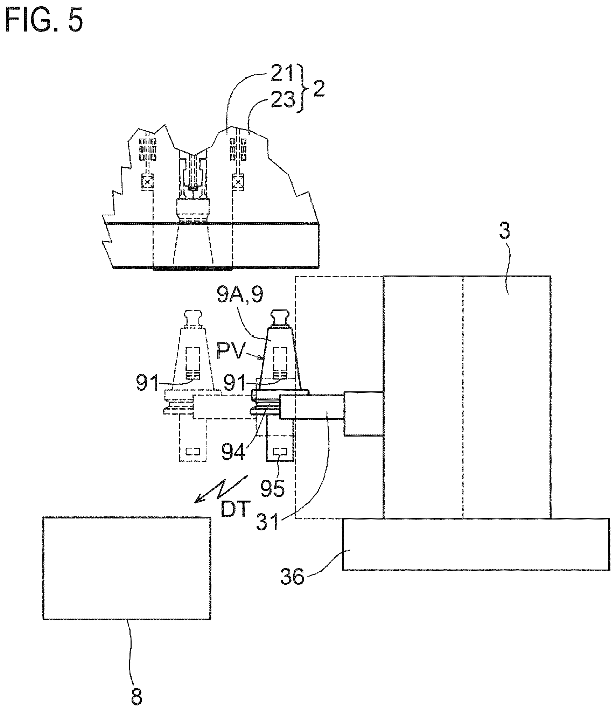

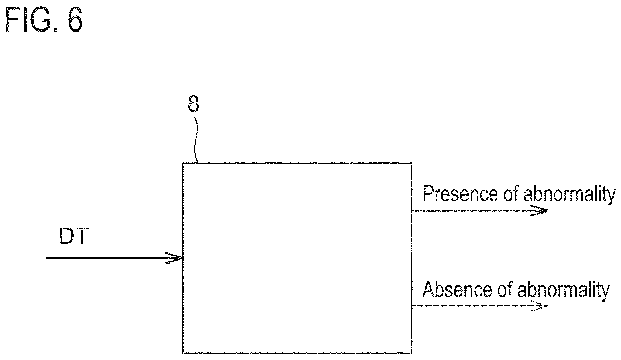

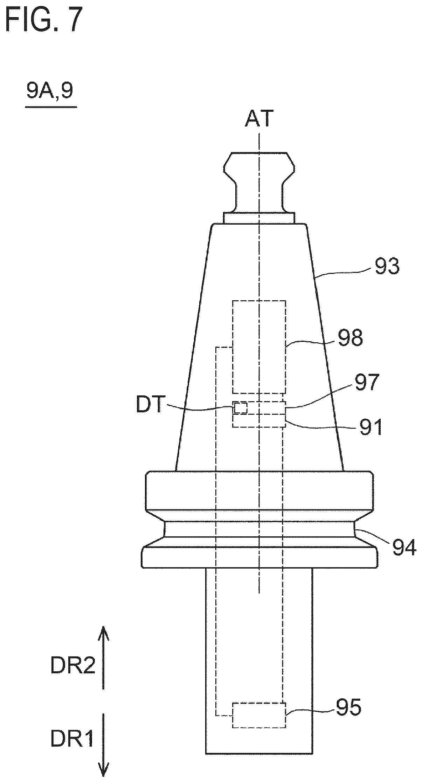

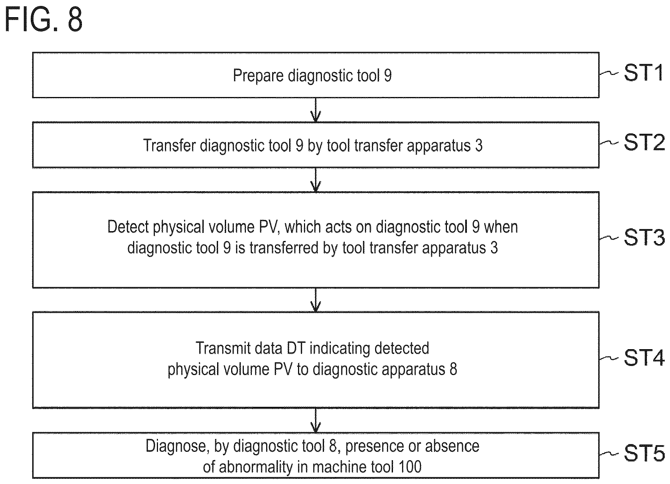

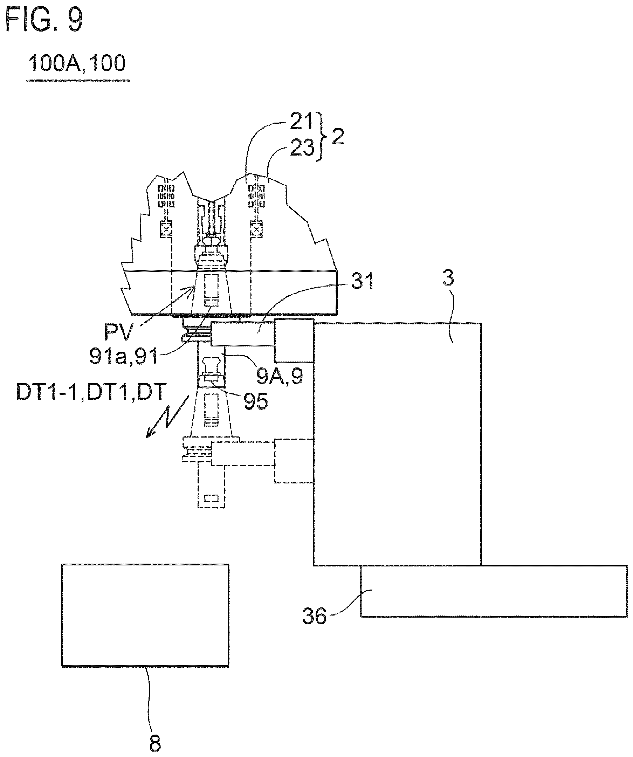

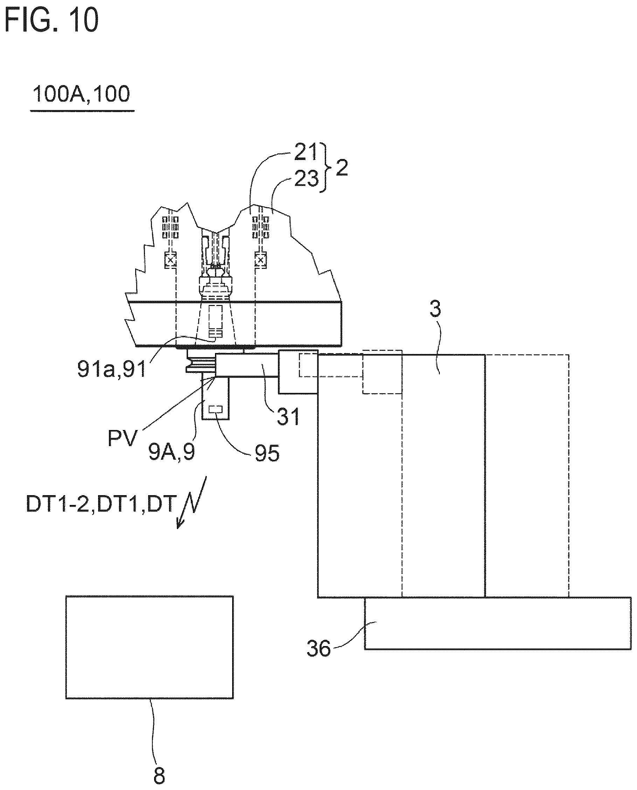

With reference to FIGs. 1 to 10, a machine tool 100A, a diagnostic tool 9A, and a diagnostic method for the machine tool according to the example not covered by the claims will be described. FIG. 1 is a diagram of the machine tool 100A according to the example not covered by the claims, schematically illustrating part of the machine tool 100A. FIG. 2 is a schematic illustration of a state in which a tool B is attached to a tool spindle 2. FIG. 3 is a schematic illustration of a state in which the diagnostic tool 9A is attached to the tool spindle 2. FIGs. 4 and 5 are each a diagram of the machine tool 100A according to the example not covered by the claims, schematically illustrating part of the machine tool 100A. FIG. 6 is a schematic illustration of a state in which a diagnostic apparatus 8 diagnoses presence or absence of an abnormality in the machine tool, based on data DT. FIG. 7 is a diagram of the diagnostic tool 9A according to the example not covered by the claims, schematically illustrating the diagnostic tool. FIG. 8 is a flowchart of an example of the diagnostic method for the machine tool according to the example not covered by the claims. FIGs. 9 and 10 are each a diagram of the machine tool 100A according to the example not covered by the claims, schematically illustrating part of the machine tool 100A.

### (Machine Tool 100A)

As illustrated in FIG. 1, the machine tool 100A according to the example not covered by the claims includes the tool spindle 2, a tool transfer apparatus 3, and the diagnostic apparatus 8. The machine tool 100A may include a tool B. In addition, the machine tool 100A may include the diagnostic tool 9A.

As illustrated in FIG. 2, the tool spindle 2 is capable of holding the tool B. In an example illustrated in FIG. 2, the tool spindle 2 includes a rotation body 21, which is capable of holding the tool B, and a support 23, which supports the rotation body 21 to be rotatable about a first axis AX1.

As illustrated in FIG. 3, the tool spindle 2 is capable of holding the diagnostic tool 9A. In an example illustrated in FIG. 3, the rotation body 21 of the tool spindle 2 holds the diagnostic tool 9A. In addition, the support 23 supports the rotation body 21, which holds the diagnostic tool 9A, to be rotatable about the first axis AX1.

As illustrated in FIGs. 4 and 5, the tool transfer apparatus 3 is capable of transferring each the tool B and the diagnostic tool 9A. The tool transfer apparatus 3 is provided separately from the tool spindle 2. In an example illustrated in FIG. 4, the tool transfer apparatus 3 includes a holder 31, which holds the tool B, and a mover 36, which moves the holder 31. In an example illustrated in FIG. 5, the holder 31 holds the diagnostic tool 9A. Further, the mover 36 moves the holder 31, which holds the diagnostic tool 9A.

As illustrated in FIG. 5, the diagnostic tool 9A includes a sensor 91. The sensor 91 detects a physical quantity PV, which acts on the diagnostic tool 9A. Examples of the physical quantity PV to be detected by the sensor 91 includes acceleration that acts on the diagnostic tool 9A and vibration that acts on the diagnostic tool 9A.

In the example illustrated in FIG. 5, the sensor 91 detects the physical quantity PV, which acts on the diagnostic tool 9A (examples including the acceleration that acts on the diagnostic tool 9A and the vibration that acts on the diagnostic tool 9A) when the diagnostic tool 9A is transferred by the tool transfer apparatus 3.

It is to be noted that herein, the diagnostic tool 9 being transferred by the tool transfer apparatus 3 includes all processes that the tool transfer apparatus 3 transfers the diagnostic tool 9. More specifically, the diagnostic tool 9 being transferred by the tool transfer apparatus 3 includes (1) the tool transfer apparatus 3 receiving the diagnostic tool 9 from one component element of the machine tool (for example, one of the tool magazine and the tool spindle). The diagnostic tool 9 being transferred by the tool transfer apparatus 3 includes (2) the tool transfer apparatus 3 moving the diagnostic tool 9 from one component element of the machine tool (for example, one of the tool magazine and the tool spindle) toward the other component element of the machine tool (for example, the other one of the tool magazine and the tool spindle). In addition, the diagnostic tool 9 being transferred by the tool transfer apparatus 3 includes (3) the tool transfer apparatus 3 delivering the diagnostic tool 9 to the other component element of the machine tool (for example, the other one of the tool magazine and the tool spindle).

As illustrated in FIG. 5, the diagnostic apparatus 8 receives, from the sensor 91, data DT indicating the physical quantity PV, which acts on the diagnostic tool 9A when the diagnostic tool 9A is transferred by the tool transfer apparatus 3. It is to be noted that the data DT may be analog data (for example, a sensor signal itself) indicating the physical quantity PV or digital data obtained by processing the analog data indicating the physical quantity PV.

As illustrated in FIG. 6, the diagnostic apparatus 8 analyzes the data DT indicating the physical quantity PV, which acts on the diagnostic tool 9A when the diagnostic tool 9A is transferred by the tool transfer apparatus 3, and thus diagnoses presence or absence of an abnormality in the machine tool 100A.

For example, in a case where deviation of the data DT from reference data exceeds an allowable range, the diagnostic apparatus 8 determines the presence of an abnormality in the machine tool 100A. In addition, in a case where the deviation of the data DT from the reference data falls within the allowable range, the diagnostic apparatus 8 determines the absence of the abnormality in the machine tool 100A. It is to be noted that the reference data may be set, based on an initial state of the machine tool 100A (for example, a brand new state of the machine tool 100A), or may be set, based on a state immediately after maintenance of the machine tool 100A.

In the machine tool 100A in the example not covered by the claims, the data DT indicating the physical quantity PV, which acts on the diagnostic tool 9A when the diagnostic tool 9A is transferred by the tool transfer apparatus 3 is analyzed, and thus the presence or absence of an abnormality in the machine tool 100A is diagnosed. Such a diagnosis enables detection of the abnormality in the machine tool 100A promptly.

In addition, in the machine tool 100A in the example not covered by the claims, the diagnostic tool 9A is transferred with use of the tool transfer apparatus 3 for transferring the tool B. This eliminates the need to provide a dedicated apparatus for transferring the diagnostic tool 9A. Further, the diagnostic tool 9A moves along a path similar to the path in which the tool B is transferred by the tool transfer apparatus 3. Thus, in a figurative sense, by using the diagnostic tool 9A, the diagnostic apparatus 8 is capable of detecting the state of the machine tool when viewed from a tool transferred by the tool transfer apparatus 3.

### (Diagnostic Tool 9A)

As illustrated in FIG. 5, the diagnostic tool 9A in the example not covered by the claims is a diagnostic tool transferred by the tool transfer apparatus 3 of the machine tool 100A in order to detect the presence or absence of an abnormality in the machine tool 100A.

As illustrated in FIG. 7, the diagnostic tool 9A includes a first portion 93, a second portion 94, the sensor 91, and a transmission circuit 95.

As illustrated in FIG. 3, the first portion 93 is held by the tool spindle 2 (more specifically, the rotation body 21) of the machine tool 100A.

As illustrated in FIG. 5, the second portion 94 is held by the tool transfer apparatus 3 (more specifically, the holder 31).

The sensor 91 detects the physical quantity PV, which acts on the diagnostic tool 9A (examples including the acceleration that acts on the diagnostic tool 9A and the vibration that acts on the diagnostic tool 9A) when the diagnostic tool 9A is transferred by the tool transfer apparatus 3.

The transmission circuit 95 transmits the data DT indicating the physical quantity PV, which acts on the diagnostic tool 9A when the diagnostic tool 9A is transferred by the tool transfer apparatus 3, to the diagnostic apparatus 8 of the machine tool. The transmission circuit 95 may transmit the data DT indicating the physical quantity PV, which acts on the diagnostic tool 9A when the diagnostic tool 9A is transferred by the tool transfer apparatus 3, to the diagnostic apparatus 8 of the machine tool in real time.

Alternatively or additionally, as illustrated in FIG. 7, the diagnostic tool 9A may include a memory 97, which stores the data DT. The memory 97 stores the data DT indicating the physical quantity PV, which acts on the diagnostic tool 9A when the diagnostic tool 9A is transferred by the tool transfer apparatus 3. In this case, the diagnostic apparatus 8 receives the data DT directly or indirectly from the memory 97, and analyzes the received data DT.

The diagnostic tool 9A in the example not covered by the claims detects the data DT indicating the physical quantity PV, which acts on the diagnostic tool 9A when the diagnostic tool 9A is transferred by the tool transfer apparatus 3. The diagnostic apparatus 8 diagnoses the presence or absence of an abnormality in the machine tool 100A, based on the data DT. In this manner, the abnormality in the machine tool 100A is detected promptly.

In addition, the diagnostic tool 9A in the example not covered by the claims is transferred with use of the tool transfer apparatus 3 for transferring the tool B. This eliminates the need to provide a dedicated apparatus for transferring the diagnostic tool 9A. Further, the diagnostic tool 9A moves along a path similar to the path along in which the tool B is transferred by the tool transfer apparatus 3. Thus, in a figurative sense, by detecting the physical quantity that acts on the diagnostic tool 9A itself, the diagnostic tool 9A is capable of detecting the state of the machine tool when viewed from the tool transferred by the tool transfer apparatus 3.

### (Diagnostic Method for Machine Tool 100A)

A diagnostic method for the machine tool 100A in the example not covered by the claims will be described with reference to FIGs. 1 to 10.

As illustrated in FIG. 7, in a first step ST1, the diagnostic tool 9A, which includes the sensor 91, is prepared. The first step ST1 is a preparation step. The diagnostic tool 9A, which is prepared in the preparation step, is attachable to the tool spindle 2 (more specifically, the rotation body 21) (see FIG. 3)). In addition, the diagnostic tool 9A, which is prepared in the preparation step, is transferrable by the tool transfer apparatus 3 other than the tool spindle 2 (see FIG. 5).

As illustrated in FIG. 5, in a second step ST2, the diagnostic tool 9A is transferred by the tool transfer apparatus 3. The second step ST2 is a transfer step.

It is to be noted that herein, the transfer step (in other words, the diagnostic tool 9 being transferred by the tool transfer apparatus 3), includes all processes that the tool transfer apparatus 3 transfers the diagnostic tool 9. More specifically, the transfer step includes (1) receiving, by the tool transfer apparatus 3, the diagnostic tool 9 from one component element of the machine tool (for example, one of the tool magazine and the tool spindle). The transfer step includes (2) moving, by the tool transfer apparatus 3, the diagnostic tool 9 from one component element of the machine tool (for example, one of the tool magazine and the tool spindle) toward the other component element of the machine tool (for example, the other one of the tool magazine and the tool spindle). In addition, the transfer step includes (3) delivering, by the tool transfer apparatus 3, the diagnostic tool 9 to the other component element of the machine tool (for example, the other one of the tool magazine and the tool spindle).

As illustrated in FIG. 5, in a third step ST3, the physical quantity PV, which acts on the diagnostic tool 9A, is detected by the sensor 91. The third step ST3 is a detection step. In the detection step, the physical quantity PV (examples including the acceleration that acts on the diagnostic tool 9A and the vibration that acts on the diagnostic tool 9A), which acts on the diagnostic tool 9A when the diagnostic tool 9A is transferred by the tool transfer apparatus 3, is detected by the sensor 91.

In a fourth step ST4, the data DT (for example, analog data or digital data) indicating the above-described physical quantity PV is transmitted to the diagnostic apparatus 8. The fourth step ST4 is a data transmission step. In the data transmission step, the data DT indicating the above-described physical quantity PV, which has been detected by the sensor 91, is transmitted from the diagnostic tool 9A to the diagnostic apparatus 8. The diagnostic apparatus 8 stores the received data DT in a memory.

It is to be noted that in a case where the diagnostic tool 9A does not have the data transmission function, the fourth step ST4 is omitted. In this case, the data DT stored in the memory 97 of the diagnostic tool 9A is extracted later, and the extracted data DT is stored in a memory of the diagnostic apparatus 8.

As illustrated in FIGs. 5 and 6, in a fifth step ST5, the presence or absence of an abnormality in the machine tool 100A is diagnosed. The fifth step ST5 is a diagnosis step. In the diagnosis step, the presence or absence of the abnormality in the machine tool 100A is diagnosed, based on the physical quantity PV (examples including the acceleration that acts on the diagnostic tool 9A and the vibration that acts on the diagnostic tool 9A), which is detected by the sensor 91 when the diagnostic tool 9A is transferred by the tool transfer apparatus 3. More specifically, the diagnostic step includes (1) receiving, by the diagnostic apparatus 8, the data DT indicating the physical quantity PV, which acts on the diagnostic tool 9A when the diagnostic tool 9A is transferred by the tool transfer apparatus 3, directly or indirectly from the diagnostic tool 9A, and (2) analyzing, by the diagnostic apparatus 8, the data DT to diagnose the presence or absence of the abnormality in the machine tool 100A.

For example, in a case where the deviation of the data DT, which is received from the sensor 91, from the reference data exceeds an allowable range, the diagnostic apparatus 8 determines the presence of the abnormality in the machine tool 100A. For example, in a case where the deviation of the data DT, which is received from the sensor 91, from the reference data falls within the allowable range, the diagnostic apparatus 8 determines the absence of the abnormality in the machine tool 100A.

In the diagnostic method for the machine tool in the example not covered by the claims, the presence or absence of the abnormality in the machine tool 100A is diagnosed, based on the physical quantity PV, which is detected by the sensor 91 when the machine tool is transferred by the tool transfer apparatus 3. Such a diagnosis enables detection of the abnormality in the machine tool 100A promptly.

In addition, in the diagnostic method for the machine tool in the example not covered by the claims, the diagnostic tool 9A is transferred with use of the tool transfer apparatus 3 for transferring the tool B. This eliminates the need to provide a dedicated apparatus for transferring the diagnostic tool 9A. Further, the diagnostic tool 9A moves along a path similar to the path in which the tool B is transferred by the tool transfer apparatus 3. Thus, in a figurative sense, it becomes possible to detect the state of the machine tool when viewed from the tool transferred by the tool transfer apparatus 3, by using the diagnostic tool 9A.

### (Any Additional Configuration)

Any additional configuration adoptable in the machine tool 100A, the diagnostic tool 9A, and the diagnostic method for the machine tool in the example not covered by the claims will be described with reference to FIGs. 1 to 10.

In an example illustrated in FIG. 9 or FIG. 10, the sensor 91 includes a first sensor 91a (for example, an acceleration sensor), which detects at least one of acceleration and vibration that acts on the diagnostic tool 9A when the diagnostic tool 9A is transferred between the tool transfer apparatus 3 and the tool spindle 2.

In the example illustrated in FIG. 9 or FIG. 10, when the diagnostic tool 9A is transferred between the tool transfer apparatus 3 and the tool spindle 2, the above-described detection step (the third step ST3) includes detecting, by the sensor 91, the physical quantity PV, which acts on the diagnostic tool 9A (for example, at least one of the acceleration and the vibration that acts on the diagnostic tool 9A).

It is to be noted that FIG. 9 illustrates a state in which the diagnostic tool 9A is transferred from the tool transfer apparatus 3 to the tool spindle 2. In addition, FIG. 10 illustrates a state in which the diagnostic tool 9A is transferred from the tool spindle 2 to the tool transfer apparatus 3 (more specifically, the tool transfer apparatus 3 receives the diagnostic tool 9A from the tool spindle 2).

In the example illustrated in FIG. 9 or FIG. 10, the above-described data transmission step (the fourth step ST4) includes transmitting, from the diagnostic tool 9A to the diagnostic apparatus 8, the data DT indicating the physical quantity PV, which acts on the diagnostic tool 9A when the diagnostic tool 9A is transferred between the tool transfer apparatus 3 and the tool spindle 2.

The data DT includes first data DT1 indicating physical quantity PV (for example, at least one of the acceleration and the vibration that acts on the diagnostic tool 9A), which is detected by the sensor 91 when the diagnostic tool 9A is transferred between the tool transfer apparatus 3 and the tool spindle 2. In the example illustrated in FIG. 9, the data DT includes first data DT1-1 indicating the physical quantity PV, which acts on the diagnostic tool 9A when the diagnostic tool 9A is transferred from the tool transfer apparatus 3 to the tool spindle 2. In the example illustrated in FIG. 10, the data DT includes first data DT1-2 indicating the physical quantity PV, which acts on the diagnostic tool 9A when the diagnostic tool 9A is transferred from the tool spindle 2 to the tool transfer apparatus 3.

In the example illustrated in FIG. 9 or FIG. 10, the above-described diagnostic step (the fifth step ST5) includes diagnosing, by the diagnostic apparatus 8, the presence or absence of an abnormality in the machine tool 100A, based on the physical quantity PV (for example, at least one of the acceleration and the vibration that acts on the diagnostic tool 9A), which is detected by the sensor 91 when the diagnostic tool 9A is transferred between the tool transfer apparatus 3 and the tool spindle 2.

More specifically, the diagnostic step (the fifth step ST5) includes (1) receiving, by the diagnostic apparatus 8, from the diagnostic tool 9A, the first data DT1 indicating the physical quantity PV, which is detected by the sensor 91 (for example, at least one of the acceleration and the vibration that acts on the diagnostic tool 9A) when the diagnostic tool 9A is transferred between the tool transfer apparatus 3 and the tool spindle 2, and (2) analyzing, by the diagnostic apparatus 8, the first data DT1 to diagnose the presence or absence of an abnormality in the machine tool 100A.

In the example illustrated in FIG. 9, the diagnostic step (the fifth step ST5) includes (1) receiving, by the diagnostic apparatus 8, from the diagnostic tool 9A, the first data DT1-1 indicating the physical quantity PV (for example, at least one of the acceleration and the vibration that acts on the diagnostic tool 9A), which is detected by the sensor 91 when the diagnostic tool 9A is transferred from the tool transfer apparatus 3 to the tool spindle 2, and (2) analyzing, by the diagnostic apparatus 8, the first data DT 1-1 to diagnose the presence or absence of the abnormality in the machine tool 100A.

In the example illustrated in FIG. 10, the diagnostic step (the fifth step ST5) includes (1) receiving, by the diagnostic apparatus 8, from the diagnostic tool 9A, the first data DT1-2 indicating the physical quantity PV (for example, at least one of the acceleration and the vibration that acts on the diagnostic tool 9A), which is detected by the sensor 91 when the diagnostic tool 9A is transferred from the tool spindle 2 to the tool transfer apparatus 3, and (2) analyzing, by the diagnostic apparatus 8, the first data DT 1-2 to diagnose the presence or absence of the abnormality in the machine tool 100A.

The diagnostic apparatus 8 may determine the presence of the abnormality in the machine tool 100A, in a case where the first data (DT1; DT1-1; DT1-2) indicates that abnormal acceleration or abnormal vibration has acted on the diagnostic tool 9A. More specifically, the diagnostic apparatus 8 may determine the presence of the abnormality in the machine tool 100A, in a case where the first data (DT1; DT1-1; DT1-2) indicates that the acceleration or the vibration that acts on the diagnostic tool 9A deviates from a preset allowable range. In addition, the diagnostic apparatus 8 may determine the absence of the abnormality in the machine tool 100A, in a case where the first data (DT1; DT1-1; DT1-2) indicates that the acceleration or the vibration that acts on the diagnostic tool 9A falls within the preset allowable range.

### (Embodiment)

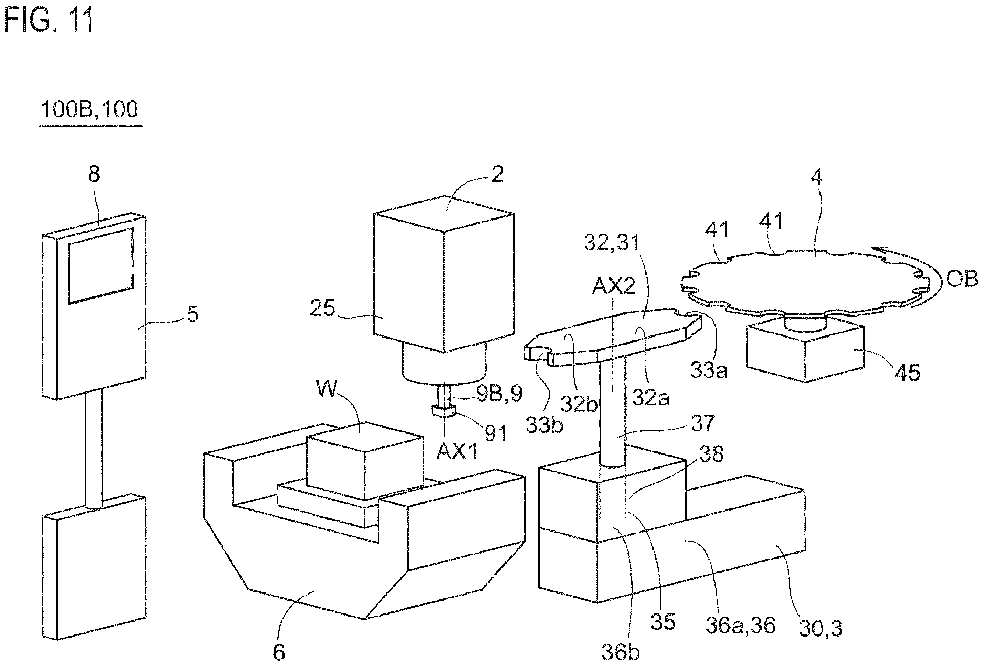

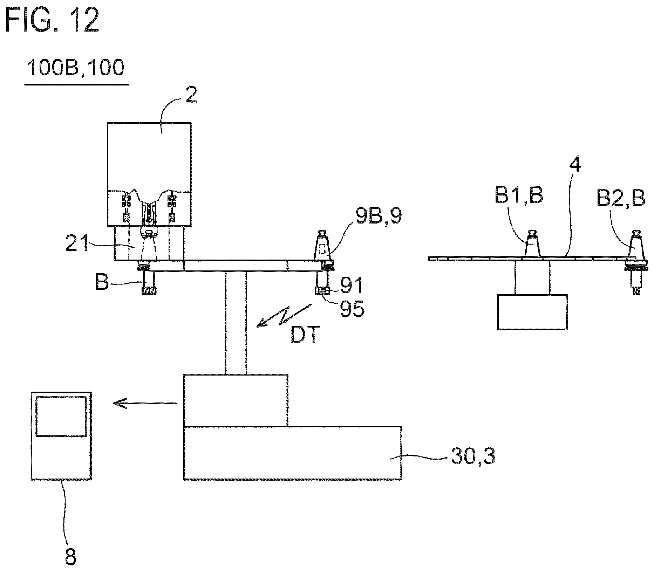

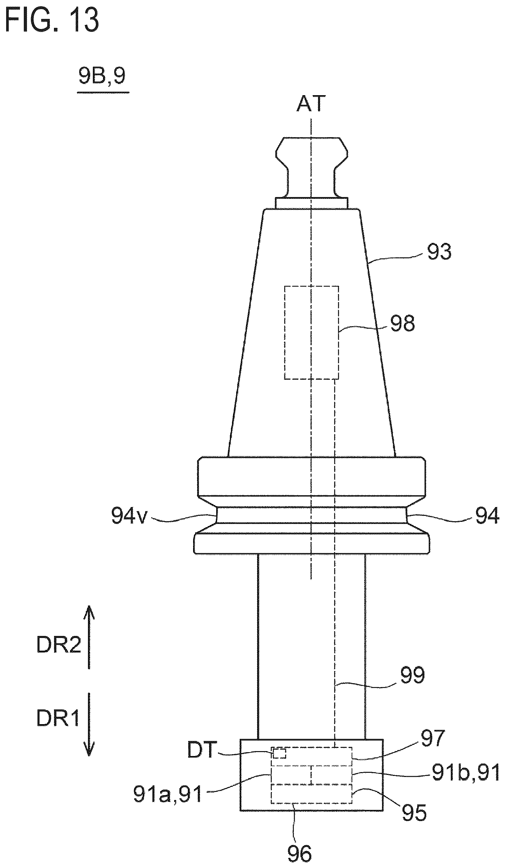

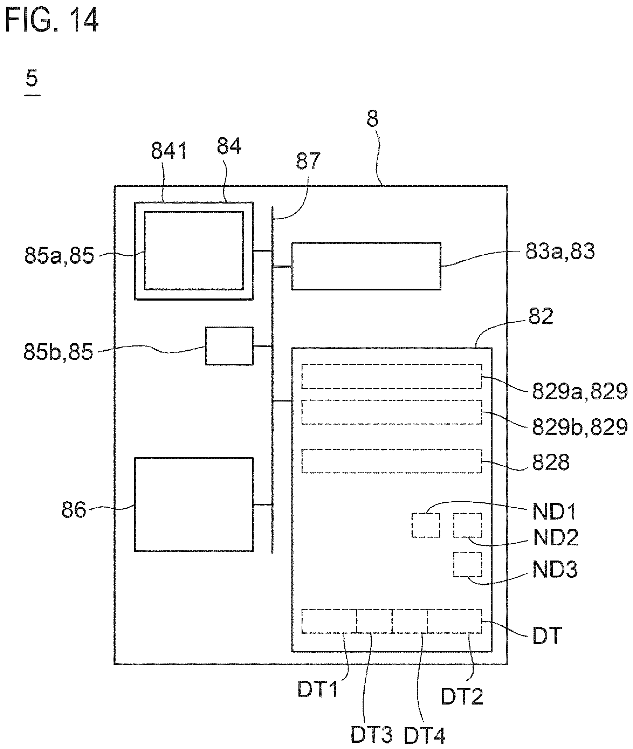

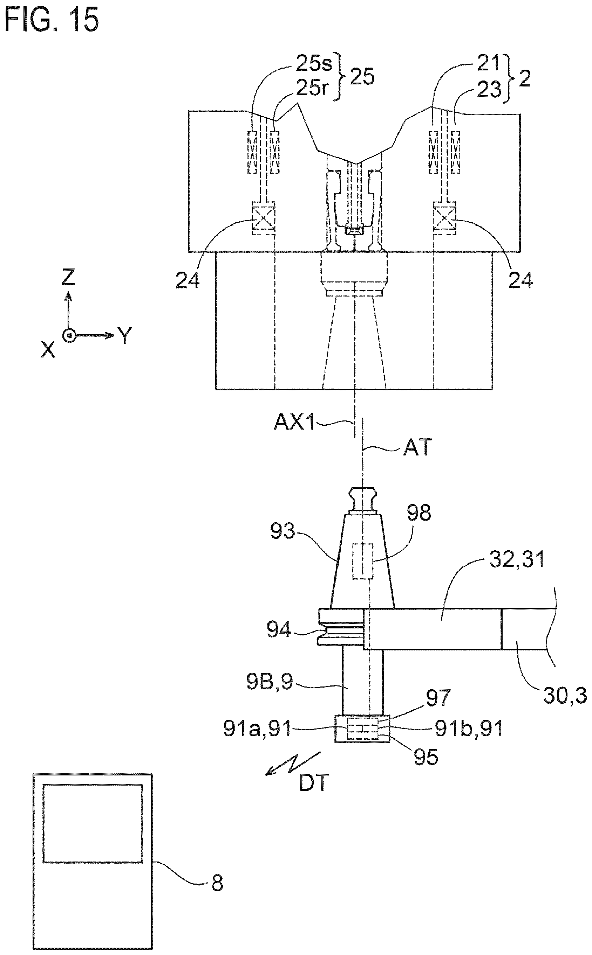

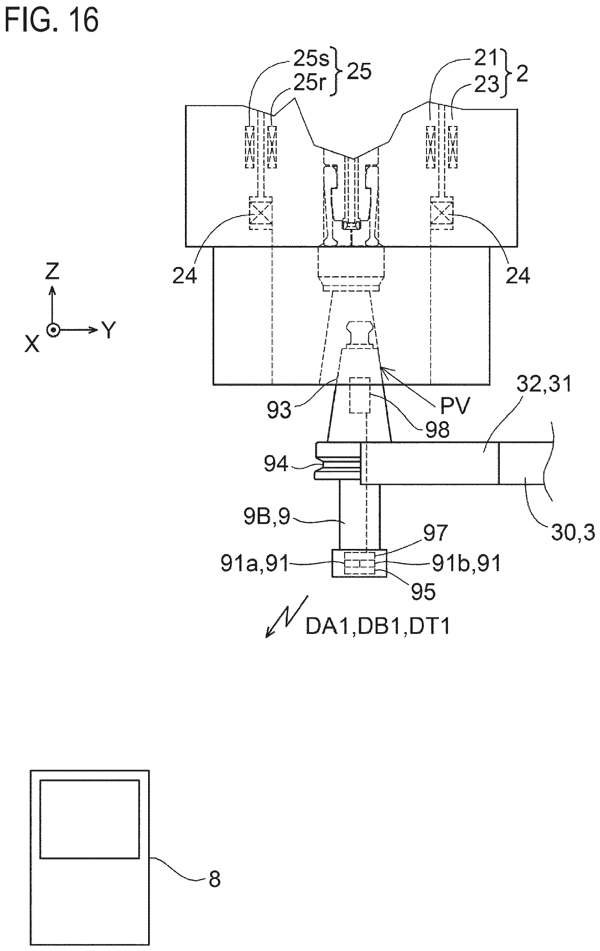

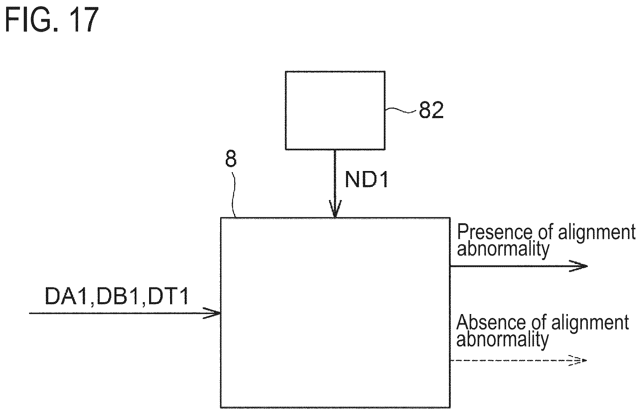

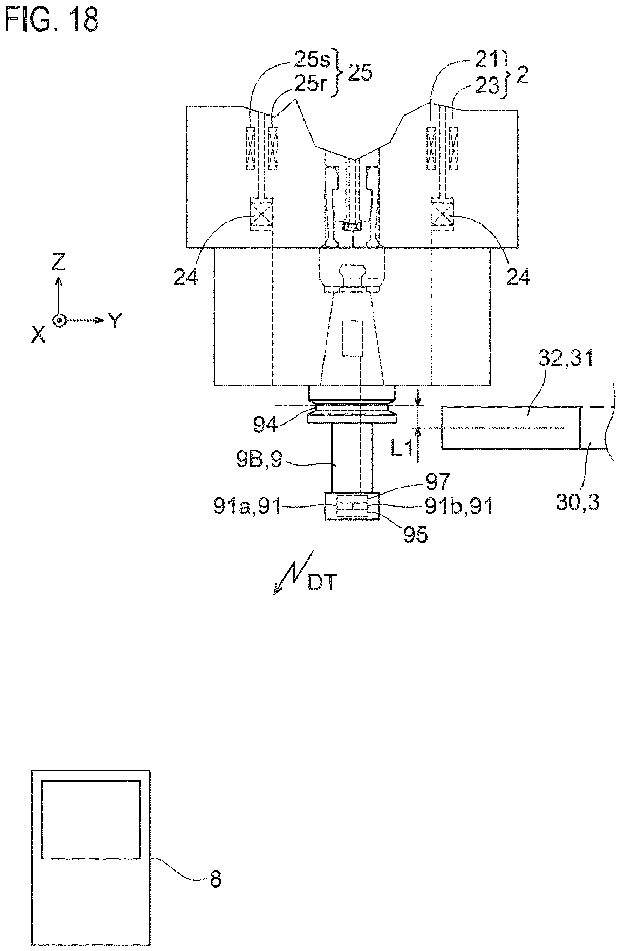

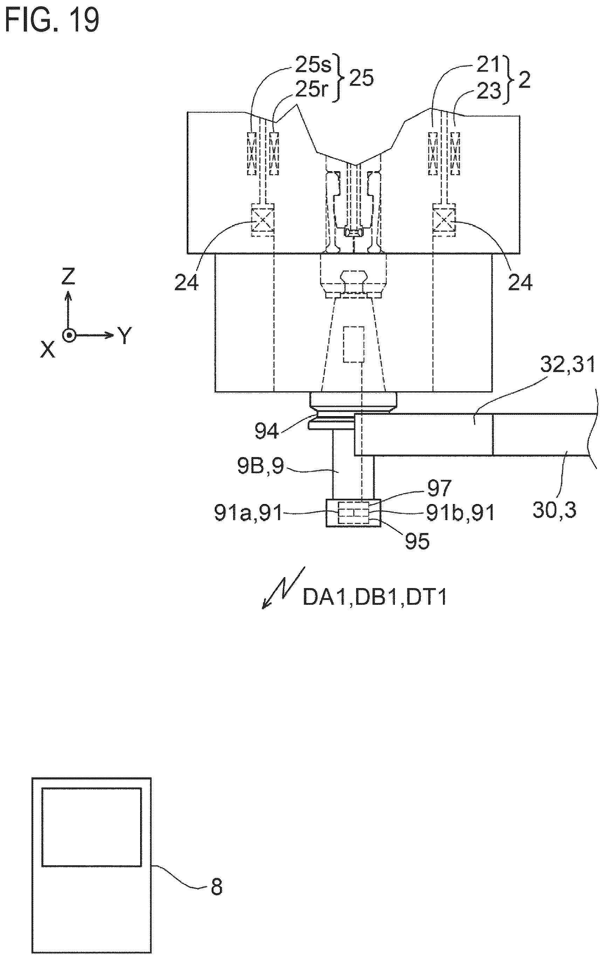

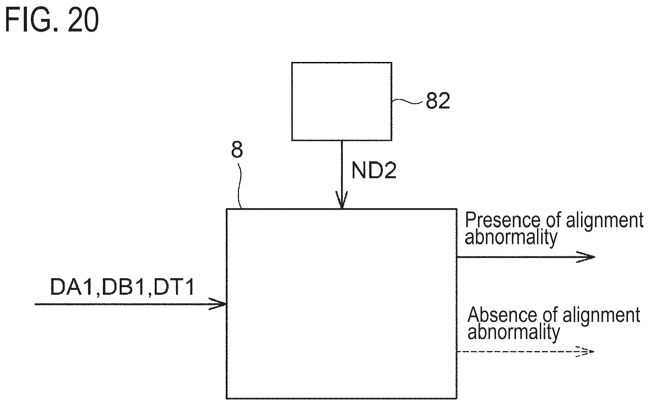

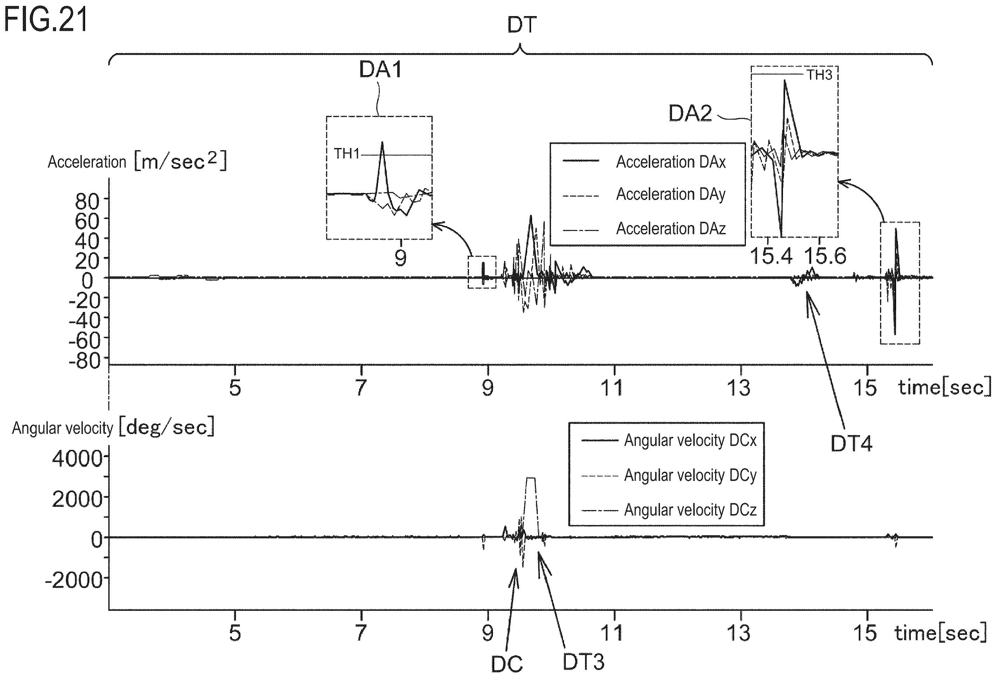

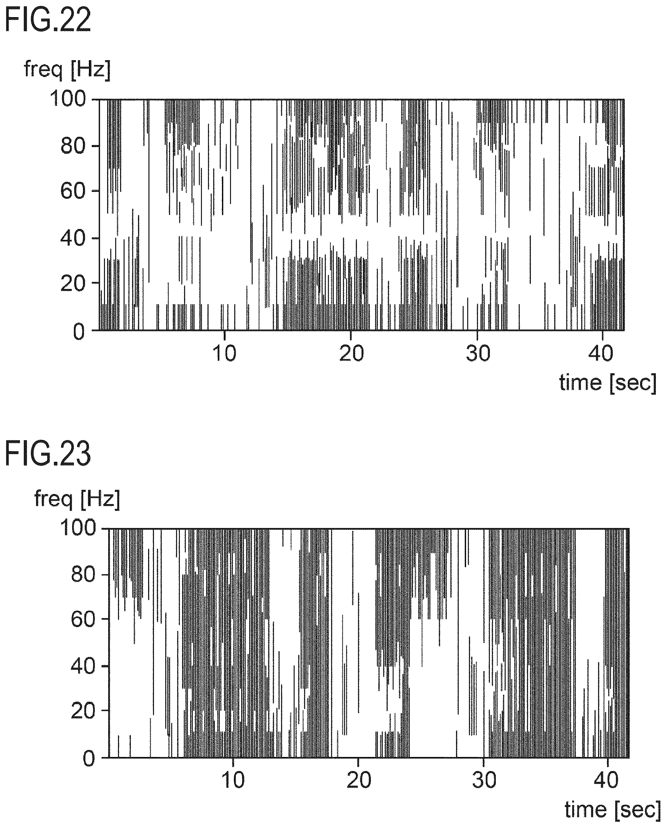

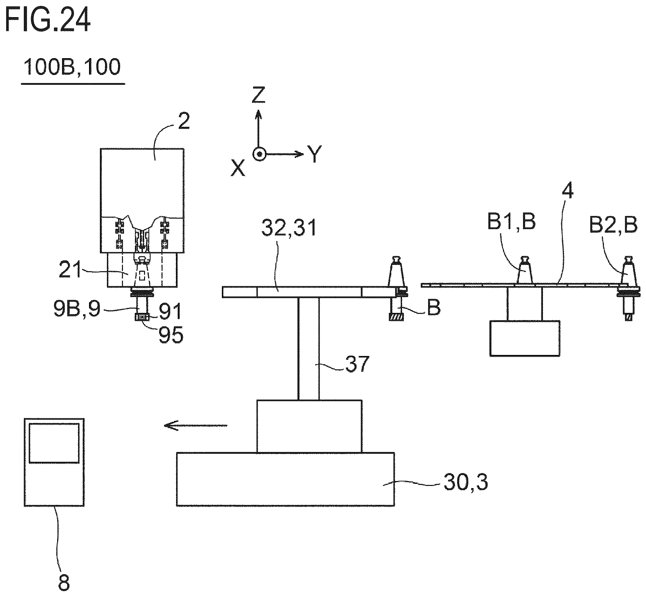

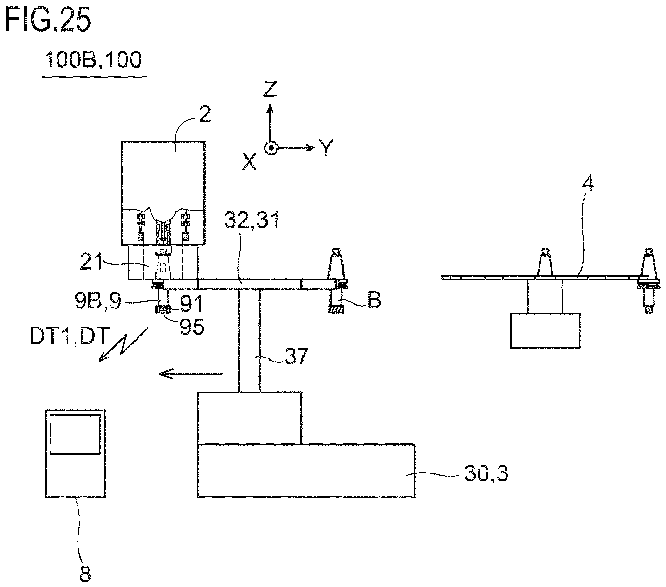

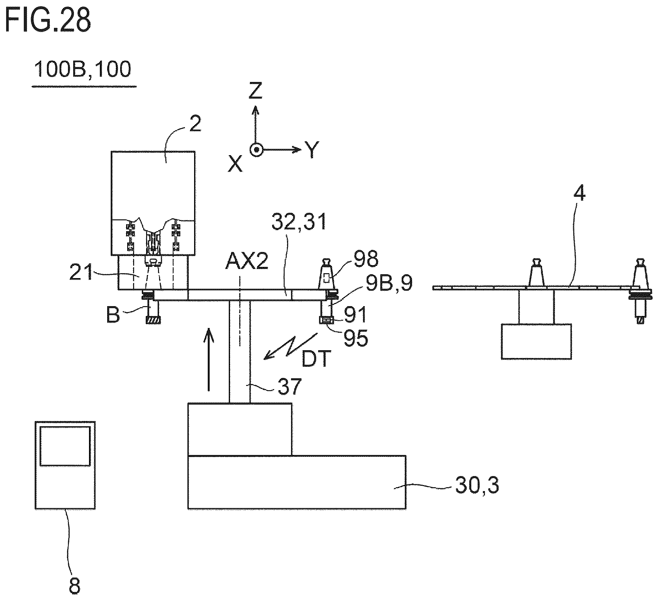

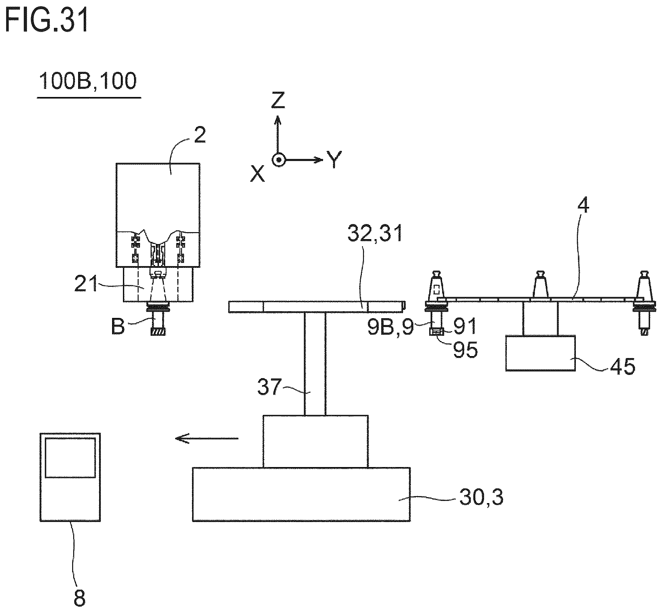

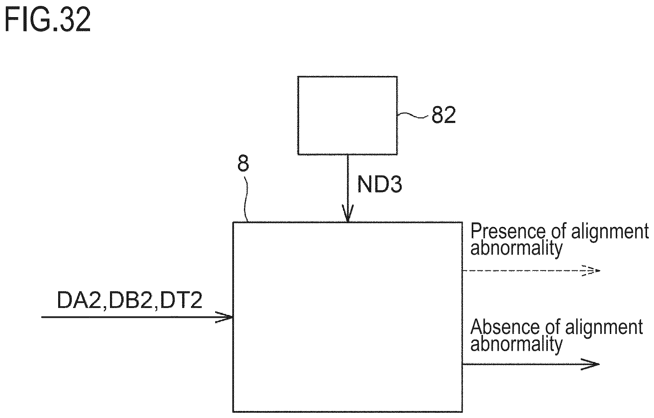

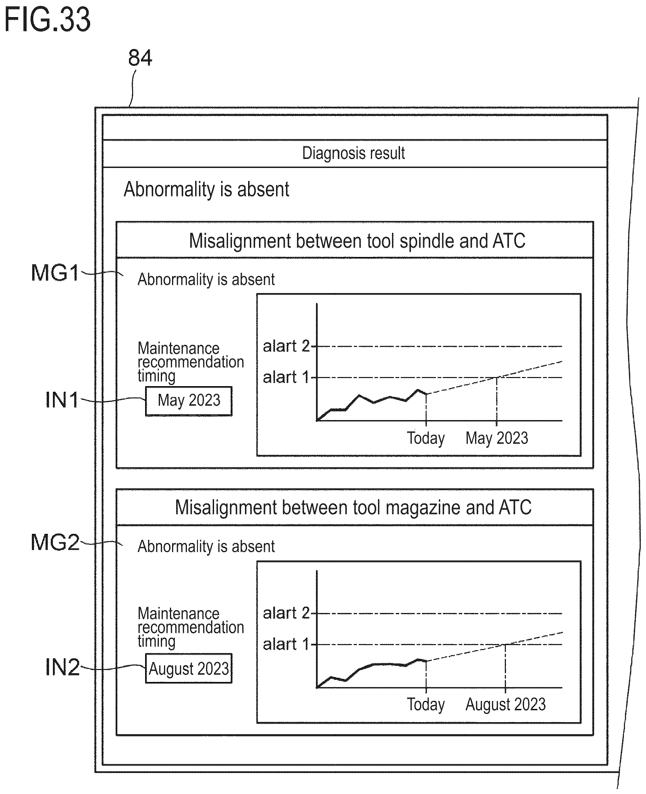

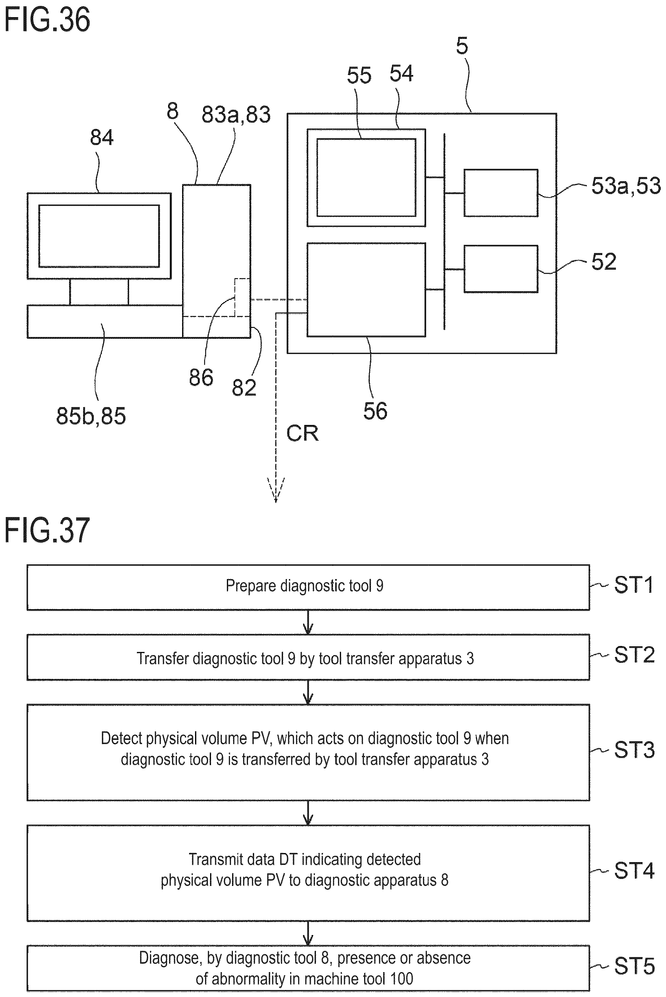

A machine tool 100B, a diagnostic tool 9B, and a diagnostic method for the machine tool in the embodiment will be described with reference to FIGs. 11 to 37. FIG. 11 is a diagram of the machine tool 100B according to the embodiment, schematically illustrating the machine tool 100B. FIG. 12 is a diagram of the machine tool 100B according to the embodiment, schematically illustrating the machine tool 100B. FIG. 13 is a diagram of the diagnostic tool 9B according to the embodiment, schematically illustrating the diagnostic tool 9B. FIG. 14 is a block diagram of a hardware configuration of the diagnostic apparatus 8, illustrating an example of the hardware configuration. FIGs. 15 and 16 are each a diagram of the machine tool 100B according to the embodiment, schematically illustrating part of the machine tool 100B. FIG. 17 is a schematic illustration of a state in which the diagnostic apparatus 8 diagnoses presence or absence of an abnormality in the machine tool, based on first data DT1. FIGs. 18 and 19 are each a diagram of the machine tool 100B according to the embodiment, schematically illustrating part of the machine tool 100B. FIG. 20 is a schematic illustration of a state in which the diagnostic apparatus 8 diagnoses the presence or absence of the abnormality in the machine tool, based on the first data DT1. FIG. 21 is a diagram of data acquired by a sensor 91, schematically illustrating an example of the data DT. FIGs. 22 and 23 are each a graph obtained by frequency analysis of vibration that acts on the diagnostic tool 9B, schematically illustrating an example of the graph. FIGs. 24 to 31 are each a diagram of the machine tool 100B according to the embodiment, schematically illustrating part of the machine tool 100B. FIG. 32 is a schematic illustration of a state in which the diagnostic apparatus 8 diagnoses the presence or absence of the abnormality in the machine tool, based on second data DT2. FIGs. 33 to 35 are each a diagram of an image displayed on a display device 84, schematically illustrating an example of the image. FIG. 36 is a schematic illustration of a state in which the diagnostic apparatus 8 and a controller 5 are communicably connected with each other. FIG. 37 is a flowchart of an example of the diagnostic method for the machine tool according to the embodiment.

As illustrated in FIGs. 11 and 12, the machine tool 100B in the embodiment includes: (1) a tool spindle 2, which is capable of holding a diagnostic tool 9B including a sensor 91; (2) a tool transfer apparatus 3, which is provided separately from the tool spindle 2, and which is capable of transferring the diagnostic tool 9B; and (3) a diagnostic apparatus 8, which receives, from the sensor 91, data DT indicating physical quantity PV, which acts on the diagnostic tool 9B when the diagnostic tool 9B is transferred by the tool transfer apparatus 3, and the diagnostic apparatus 8 analyzes the data DT to diagnose presence or absence of an abnormality in the machine tool 100B. Thus, the machine tool 100B in the embodiment exhibits similar effects to those of the machine tool 100A in the example not covered by the claims.

The diagnostic tool 9B in the embodiment is a diagnostic tool transferred by the tool transfer apparatus 3 of the machine tool 100B in order to detect the presence or absence of an abnormality in the machine tool 100B. As illustrated in FIG. 13, the diagnostic tool 9B in the embodiment includes (1) a first portion 93, which can be held by the tool spindle 2 of the machine tool 100B, (2) a second portion 94, which can be held by the tool transfer apparatus 3, (3) the sensor 91, which detects physical quantity PV, which acts on the diagnostic tool 9B when the diagnostic tool 9B is transferred by the tool transfer apparatus 3, and (4) at least one of a transmission circuit 95 and a memory 9. The transmission circuit 95 transmits the data DT indicating the physical quantity to the diagnostic apparatus 8 of the machine tool 100B, and the memory 9 stores the data DT indicating the physical quantity PV. Thus, the machine tool 100B in the embodiment exhibits similar effects to those of the machine tool 100A in the example not covered by the claims.

As illustrated in FIG. 12, the diagnostic method for the machine tool in the embodiment includes: (1) a step of preparing the diagnostic tool 9B including the sensor 91, which is attachable to the tool spindle 2 of the machine tool 100B, and which can be transferred by the tool transfer apparatus 3 other than the tool spindle 2; (2) a step of transferring the diagnostic tool 9B by the tool transfer apparatus 3; and (3) a step of detecting, by the sensor 91, physical quantity PV, which acts on the diagnostic tool 9B when the diagnostic tool 9B is transferred by the tool transfer apparatus 3, (4) a step of diagnosing the presence or absence of an abnormality in the machine tool 100B, based on the physical quantity PV, which is detected by the sensor 91 when the diagnostic tool 9B is transferred by the tool transfer apparatus 3. Thus, the diagnostic method for the machine tool in the embodiment exhibits similar effects as those in the diagnostic method for the machine tool in the example not covered by the claims.

### (Any Additional Configuration)

Any additional configuration adoptable in the machine tool 100B, the diagnostic tool 9B, and the diagnostic method for the machine tool in the embodiment will be described with reference to FIGs. 11 to 37.

### (Tool Spindle 2)

In an example illustrated in FIG. 15, the tool spindle 2 includes a rotation body 21, a support 23, a bearing 24, and a rotation driver 25.

The rotation body 21 is capable of holding a tool B (if necessary, see FIG. 12).

In addition, the rotation body 21 is capable of holding the diagnostic tool 9B. More specifically, the rotation body 21 is capable of selectively holding the tool B and the diagnostic tool 9B.

In the example illustrated in FIG. 15, the support 23 supports the rotation body 21 to be rotatable about a first axis AX1. The bearing 24 is interposed between the rotation body 21 and the support 23. In other words, the support 23 supports the rotation body 21 to be rotatable via the bearing 24.

The rotation driver 25 rotates the rotation body 21 about the first axis AX1. The rotation driver 25 includes a motor. More specifically, the rotation driver 25 includes a stator 25s, which is fixed to the support 23, and a rotor 25r, which is fixed to the rotation body 21. When an electric current is supplied to the stator 25s, an electromagnetic action between the stator 25s and the rotor 25r rotates the rotor 25r about the first axis AX1. Alternatively, the rotation driver 25 may include a motor and a transmission mechanism (examples including a gear and a transmission belt) that transmits the dynamic power of the motor to the rotation body 21.

### (Tool Magazine 4)

In an example illustrated in FIG. 12, the machine tool 100B includes a tool magazine 4 (in other words, a tool stocker). The tool magazine 4 is capable of storing a plurality of tools (B1, B2..., etc.). The tool magazine 4 is also capable of storing the diagnostic tool 9B.

In an example illustrated in FIG. 11, the tool magazine 4 includes a plurality of holding portions 41, which respectively hold a plurality of tools, and a holding portion mover 45, which moves the plurality of holding portions 41 along a circling orbit OB. At least one of the plurality of holding portions 41 is capable of holding the diagnostic tool 9B. Each of all the holding portions 41 may be capable of holding the diagnostic tool 9B.

### (Automatic tool changer 30)

In the example illustrated in FIG. 12, the tool transfer apparatus 3 includes an automatic tool changer 30. The automatic tool changer 30 is capable of exchanging a tool B, which is held by the tool spindle 2 (more specifically, the rotation body 21) with another tool.

In the example illustrated in FIG. 12, the automatic tool changer 30 is capable of exchanging the tool B, which is held by the tool spindle 2 (more specifically, the rotation body 21), with the diagnostic tool 9B. More specifically, when the automatic tool changer 30 exchanges the tool B, which is held by the tool spindle 2, with the diagnostic tool 9B, the tool spindle 2 holds the diagnostic tool 9B.

In addition, the automatic tool changer 30 is capable of exchanging the diagnostic tool 9B, which is held by the tool spindle 2 (more specifically, the rotation body 21), with the tool B. More specifically, when the automatic tool changer 30 exchanges the diagnostic tool 9B, which is held by the tool spindle 2, with the tool B, the tool spindle 2 holds the tool B.

In the example illustrated in FIG. 11, the automatic tool changer 30 includes a tool change arm 32. The tool change arm 32 functions as a holder 31, which holds the tool B (or the diagnostic tool 9B). The tool change arm 32 includes a first arm 32a and a second arm 32b. In addition, the first arm 32a includes a first gripper 33a, which is capable of gripping the tool B (or the diagnostic tool 9B), and the second arm 32b includes a second gripper 33b, which is capable of gripping the diagnostic tool 9B (or the tool B). In the example illustrated in FIG. 11, an angle formed by the first arm 32a and the second arm 32b is 180 degrees. Alternatively, the angle formed by the first arm 32a and the second arm 32b may be any angle other than 180 degrees.

In the example illustrated in FIG. 11, the automatic tool changer 30 includes: an arm rotation apparatus 35, which rotates the tool change arm 32 about a second axis AX2; and a mover 36, which linearly moves the tool change arm 32. In the example illustrated in FIG. 11, the second axis AX2 is parallel to the first axis AX1. The automatic tool changer 30 may include a rotation shaft 37, which rotates together with the tool change arm 32 about the second axis AX2, and a shaft support portion 38, which supports the rotation shaft 37 to be rotatable about the second axis AX2.

The mover 36 includes a first mover 36a, which moves the tool change arm 32 in a direction perpendicular to the second axis AX2. The mover 36 may include a second mover 36b, which moves the tool change arm 32 in a direction parallel to the second axis AX2. The mover 36 may be capable of moving the tool change arm 32 three-dimensionally.

In the example illustrated in FIG. 11, the automatic tool changer 30 transfers the diagnostic tool 9B (or the tool B) between the tool spindle 2 and the tool magazine 4. Alternatively, the automatic tool changer 30 may transfer the diagnostic tool 9B (or the tool B) between the tool spindle 2 and another transfer apparatus (in other words, a relay transfer apparatus). In other words, the tool transfer apparatus 3 may include the automatic tool changer 30 and another transfer apparatus (in other words, the relay transfer apparatus).

### (Diagnostic Tool 9B)

In an example illustrated in FIG. 13, the diagnostic tool 9B includes the sensor 91, which detects the physical quantity PV, which acts on the diagnostic tool 9B when the diagnostic tool 9B is transferred by the tool transfer apparatus 3. In addition, the diagnostic tool 9B includes a transmission circuit 95, which transmits the data DT indicating the physical quantity PV (for example, analog data that a sensor signal itself output by the sensor 91 or digital data obtained by processing the analog data), to the diagnostic apparatus 8. The transmission circuit 95 preferably transmits the data DT indicating the above-described physical quantity PV to the diagnostic apparatus 8 in a wireless manner. The transmission circuit 95 may transmit the data DT indicating the above-described physical quantity PV to the diagnostic apparatus 8 in real time.

Alternatively or additionally, the diagnostic tool 9B may include a memory 97, which stores the data DT indicating the above-described physical quantity PV. In this case, the diagnostic apparatus 8 directly or indirectly receives the data DT from the memory 97, and analyzes the received data DT.

The diagnostic tool 9B may include a reception circuit 96. The reception circuit 96 receives a sensing start command from the diagnostic apparatus 8 at a timing when the diagnostic tool 9B is transferred by the tool transfer apparatus 3. The reception circuit 96 preferably receives the sensing start command from the diagnostic apparatus 8 in a wireless manner. Upon receipt of the sensing start command via the reception circuit 96, the sensor 91 starts to detect the above-described physical quantity PV. The data DT indicating the above-described physical quantity PV, which has been detected by the sensor 91, is transmitted to the diagnostic apparatus 8 via the transmission circuit 95. It is to be noted that the transmission circuit 95 and the reception circuit 96 may be included in one circuit.

The reception circuit 96 receives a sensing end command from the diagnostic apparatus 8 at a timing after the transfer of the diagnostic tool 9B by the tool transfer apparatus 3 is completed. Upon receipt of the sensing end command via the reception circuit 96, the sensor 91 ends the detection of the above-described physical quantity PV.

The diagnostic tool 9B may include a battery 98. The battery 98 supplies the sensor 91 with electric power. The battery 98 also supplies the transmission circuit 95 and/or the reception circuit 96 with electric power. In the example illustrated in FIG. 13, the battery 98 and the sensor 91 are electrically connected with each other through a conductive wire member 99.

Herein, in a direction along the longitudinal direction of the diagnostic tool 9B, a first direction DR1 is defined as a direction from a base end portion of the diagnostic tool 9B toward a tip end portion of the diagnostic tool 9B. In addition, herein, a second direction DR2 is defined as a direction opposite to the first direction DR1.

In the example illustrated in FIG. 13, in a direction along a central axis AT of the diagnostic tool 9B, the transmission circuit 95 (or the reception circuit 96) is disposed further in a first direction DR1 than the first portion 93, which can be held by the tool spindle 2. The transmission circuit 95 (or the reception circuit 96) may be disposed further in the first direction DR1 than the second portion 94, which can be held by the tool transfer apparatus 3 (more specifically, the automatic tool changer 30). The transmission circuit 95 (or the reception circuit 96) may be disposed in the tip end portion of the diagnostic tool 9B.

In the example illustrated in FIG. 13, in the direction along the central axis AT of the diagnostic tool 9B, the sensor 91 is disposed further in the first direction DR1 than the first portion 93, which can be held by the tool spindle 2. The sensor 91 may be disposed further in the first direction DR1 than the second portion 94, which can be held by the tool transfer apparatus 3 (more specifically, the automatic tool changer 30). Alternatively, the sensor 91 may be disposed inside the first portion 93, which can be held by the tool spindle 2, or inside the second portion 94, which can be held by the tool transfer apparatus 3.

In the example illustrated in FIG. 13, the first portion 93, which can be held by the tool spindle 2, has a tapered shape in which the outer diameter diminishes further in the second direction DR2. In the example illustrated in FIG. 13, the second portion 94, which can be held by the tool transfer apparatus 3 (more specifically, the automatic tool changer 30), is disposed further in the first direction DR1 than the first portion 93. The second portion 94 may include an annular groove 94v to be gripped by the tool change arm 32.

The sensor 91 may include a first sensor 91a, which detects at least one of the acceleration and the vibration that acts on the diagnostic tool 9B when the diagnostic tool 9B is transferred by the tool transfer apparatus 3 (for example, when the diagnostic tool 9B is transferred between the tool transfer apparatus 3 and the tool spindle 2). The first sensor 91a is, for example, an acceleration sensor.

The sensor 91 may include a second sensor 91b, which detects an angular velocity that acts on the diagnostic tool 9B (in other words, a change in attitude of the diagnostic tool 9B) when the diagnostic tool 9B is transferred by the tool transfer apparatus 3 (for example, when the diagnostic tool 9B is transferred between the tool transfer apparatus 3 and the tool spindle 2).

In the example illustrated in FIG. 13, the diagnostic tool 9B is a dummy tool without a machining unit, in which the machining unit that machines a workpiece is omitted. Alternatively, the diagnostic tool 9B may be a real tool with a machining unit that machines the workpiece.

### (Diagnostic Apparatus 8)

In an example illustrated in FIG. 14, the diagnostic apparatus 8 includes a memory 82 and a processor 83. The diagnostic apparatus 8 may include the display device 84 and/or an input device 85. The input device 85 may be incorporated in the display device 84 (more specifically, the display device 84 may be a display 841, which is provided with a touch panel in which an input device 85a is incorporated). Alternatively or additionally, the diagnostic apparatus 8 may include an input device 85b (examples including a button, a switch, a lever, a pointing device, and a keyboard), which is provided separately from the display device 84.

Additionally, the diagnostic apparatus 8 may include a communication circuit 86. The communication circuit 86 receives the above-described data DT from the transmission circuit 95 of the diagnostic tool 9B. The data DT received by the communication circuit 86 is stored in the memory 82. The communication circuit 86 may transmit the above-described sensing start command and the above-described sensing end command to the reception circuit 96 of the diagnostic tool 9B.

In the example illustrated in FIG. 14, the memory 82, the processor 83, the communication circuit 86, the display device 84, and/or the input device 85 are connected with one another through a bus 87. The processor 83 includes at least one processor 83a (for example, at least one CPU).

The memory 82 is a storage medium to be readable by the processor 83. The memory 82 may be, for example, a non-volatile or volatile semiconductor memory such as a RAM, a ROM, a flash memory, may be a magnetic disk, or may be a memory of any other type. The memory 82 stores a program 829 (examples including a diagnostic program 829a and a display program 829b ), and data (for example, the above-described data DT received from the diagnostic tool 9B).

### (Transfer of Diagnostic Tool 9B between Tool Transfer Apparatus 3 and Tool Spindle 2)

As illustrated in FIGs. 15 and 16, the diagnostic apparatus 8 receives, from the sensor 91, the data DT indicating the physical quantity PV, which acts on the diagnostic tool 9B when the diagnostic tool 9B is transferred by the tool transfer apparatus 3 (more specifically, the automatic tool changer 30). In an example illustrated in FIG. 16, the above-described data DT includes the first data DT1 indicating the physical quantity detected by the sensor 91 when the diagnostic tool 9B is transferred between the tool transfer apparatus 3 and the tool spindle 2.

In an example illustrated in FIG. 16, the data DT (more specifically, the first data DT1) includes first acceleration data DA1 indicating the acceleration that acts on the diagnostic tool 9B when the diagnostic tool 9B is transferred between the automatic tool changer 30 and the tool spindle 2. Alternatively or additionally, the above-described data DT (more specifically, the first data DT1) may include first vibration data DB 1 indicating the vibration that acts on the diagnostic tool 9B when the diagnostic tool 9B is transferred between the automatic tool changer 30 and the tool spindle 2. It is to be noted that it is possible to calculate the acceleration with time differential of the speed, and it is possible to calculate the speed with time differential of displacement. Hence, the first acceleration data DA1 is preferably data acquired by the acceleration sensor, but the first acceleration data DA1 may be data acquired by a speed sensor or a displacement sensor.

In an example illustrated in FIG. 16, the diagnostic apparatus 8 analyzes the above-described first acceleration data DA1 to diagnose the presence or absence of an alignment abnormality between the automatic tool changer 30 and the tool spindle 2. More specifically, the diagnostic apparatus 8 analyzes the first acceleration data DA1 to diagnose whether a misalignment amount between the automatic tool changer 30 and the tool spindle 2 exceeds an allowable range.

Alternatively or additionally, the diagnostic apparatus 8 may analyze the above-described first vibration data DB1 to diagnose the presence or absence of the alignment abnormality between the automatic tool changer 30 and the tool spindle 2. More specifically, the diagnostic apparatus 8 may analyze the above-described first vibration data DB1 to diagnose whether the misalignment amount between the automatic tool changer 30 and the tool spindle 2 exceeds the allowable range.

In an example illustrated in FIG. 15, a noticeable alignment abnormality is present between the first axis AX1 of the tool spindle 2 (in other words, the rotation shaft of the rotation body 21) and the automatic tool changer 30 (in other words, the central axis AT of the diagnostic tool 9B, which is held by the automatic tool changer 30). In this case, in an example illustrated in FIG. 16, the first acceleration data DA1 is data indicating that abnormal acceleration has acted on the diagnostic tool 9B. In addition, the first vibration data DB1 is data indicating that abnormal vibration has acted on the diagnostic tool 9B.

In the example illustrated in FIG. 16, the above-described first acceleration data DA1 includes data of the acceleration that acts on the diagnostic tool 9B when the diagnostic tool 9B is attached to the tool spindle 2. The above-described first vibration data DB1 includes data of the vibration that acts on the diagnostic tool 9B when the diagnostic tool 9B is attached to the tool spindle 2.

In the example illustrated in FIG. 16, the diagnostic apparatus 8 analyzes the above-described first data DT1 (more specifically, at least one of the above-described first acceleration data DA1 and the above-described first vibration data DB1) to diagnose the presence or absence of the alignment abnormality between the automatic tool changer 30 and the tool spindle 2 in a direction perpendicular to the longitudinal direction of the diagnostic tool 9B. More specifically, the diagnostic apparatus 8 analyzes the above-described first data DT1 to diagnose whether the misalignment amount between the automatic tool changer 30 and the tool spindle 2 in the direction perpendicular to the longitudinal direction of the diagnostic tool 9B (in other words, the misalignment amount in X-axis direction or Y-axis direction) exceeds an allowable range.

As illustrated in FIG. 17, the diagnostic apparatus 8 may compare at least one of the first acceleration data DA1 and the first vibration data DB1 with reference data ND1 stored in the memory 82 to diagnose the presence or absence of the alignment abnormality between the automatic tool changer 30 and the tool spindle 2. For example, in a case where the deviation of the first acceleration data DA1 (or the first vibration data DB1) from the reference data ND1 exceeds the allowable range, the diagnostic apparatus 8 determines the presence of the alignment abnormality between the automatic tool changer 30 and the tool spindle 2. In addition, in a case where the deviation of the first acceleration data DA1 (or the first vibration data DB1) from the reference data ND1 falls within the allowable range, the diagnostic apparatus 8 determines the absence of the alignment abnormality between the automatic tool changer 30 and the tool spindle 2.

Alternatively, A1 technology may be used to determine, by the diagnostic apparatus 8, the presence or absence of the above-described alignment abnormality. For example, (1) machine learning is performed with use of teacher data in which at least one of the acceleration data and the vibration data when the automatic tool changer 30 attaches the diagnostic tool 9B to the tool spindle 2 is used as input data, and the presence or absence of the alignment abnormality between the automatic tool changer 30 and the tool spindle 2 is used as output data. (2) The learned model obtained by the machine learning is stored in the memory 82 of the diagnostic apparatus 8. (3) The diagnostic apparatus 8 inputs at least one of the above-described first acceleration data DA1 and the above-described first vibration data DB1 into the learned model stored in the memory 82, and acquires the presence or absence of the alignment abnormality between the automatic tool changer 30 and the tool spindle 2, as the output data.

In an example illustrated in FIG. 18, in a direction parallel to the longitudinal direction of the diagnostic tool 9B, a noticeable alignment abnormality (see a misalignment amount L1) is present between the automatic tool changer 30 and the tool spindle 2. In this case, in an example illustrated in FIG. 19, the first acceleration data DA1 is data indicating that the abnormal acceleration has acted on the diagnostic tool 9B. In addition, the first vibration data DB1 is data indicating that the abnormal vibration has acted on the diagnostic tool 9B.

In the example illustrated in FIG. 19, the above-described first acceleration data DA1 includes data of acceleration that acts on the diagnostic tool 9B when the automatic tool changer 30 (more specifically, the tool change arm 32) comes into contact with the diagnostic tool 9B, which is held by the tool spindle 2. In addition, the above-described first vibration data DB1 includes data of the vibration that acts on the diagnostic tool 9B when the automatic tool changer 30 (more specifically, the tool change arm 32) comes into contact with the diagnostic tool 9B, which is held by the tool spindle 2.

In the example illustrated in FIG. 19, the diagnostic apparatus 8 analyzes the above-described first data DT1 (more specifically, at least one of the above-described first acceleration data DA1 and the above-described first vibration data DB1) to diagnose at least the presence or absence of the alignment abnormality between the automatic tool changer 30 and the tool spindle 2 in the direction parallel to the longitudinal direction of the diagnostic tool 9B. More specifically, the diagnostic apparatus 8 analyzes the above-described first data DT1 to diagnose whether a misalignment amount between the automatic tool changer 30 and the tool spindle 2 in the direction parallel to the longitudinal direction of the diagnostic tool 9B (in other words, the misalignment amount in Z-axis direction) exceeds an allowable range.

As illustrated in FIG. 20, the diagnostic apparatus 8 may compare at least one of the first acceleration data DA1 and the first vibration data DB1 with reference data ND2, which is stored in the memory 82, to diagnose the presence or absence of the alignment abnormality between the automatic tool changer 30 and the tool spindle 2. For example, in a case where the deviation of the first acceleration data DA1 (or the first vibration data DB1) from the reference data ND2 exceeds an allowable range, the diagnostic apparatus 8 determines the presence of the alignment abnormality between the automatic tool changer 30 and the tool spindle 2 in the direction parallel to the longitudinal direction of the diagnostic tool 9B. In addition, in a case where the deviation of the first acceleration data DA1 (or the first vibration data DB1) from the reference data ND2 falls within the allowable range, the diagnostic apparatus 8 determines the absence of the alignment abnormality between the automatic tool changer 30 and the tool spindle 2 in the direction parallel to the longitudinal direction of the diagnostic tool 9B.

Alternatively, the AI technology may be used to determine, by the diagnostic apparatus 8, the presence or absence of the above-described alignment abnormality. For example, (1) machine learning is performed with use of teacher data in which at least one of the acceleration data and the vibration data when the automatic tool changer 30 receives the diagnostic tool 9B from the tool spindle 2 is used as input data, and the presence or absence of the alignment abnormality between the automatic tool changer 30 and the tool spindle 2 is used as output data. (2) The learned model obtained by machine learning is stored in the memory 82 of the diagnostic apparatus 8. (3) The diagnostic apparatus 8 inputs at least one of the above-described first acceleration data DA1 and the above-described first vibration data DB1 into the learned model stored in the memory 82, and acquires the presence or absence of the alignment abnormality between the automatic tool changer 30 and the tool spindle 2, as the output data.

FIG. 21 illustrates an example of the data DT including the first acceleration data DA1 (in other words, an example of the data DT including the first acceleration data DA1 indicating the acceleration that acts on the diagnostic tool 9B when the diagnostic tool 9B is transferred between the automatic tool changer 30 and the tool spindle 2).

In the example illustrated in FIG. 21, the first acceleration data DA1 includes lateral acceleration data (more specifically, first lateral acceleration data DAx and/or second lateral acceleration data DAy) that is acceleration data of the diagnostic tool 9B in the direction perpendicular to the longitudinal direction of the diagnostic tool 9B. The first lateral acceleration data DAx is acceleration data of the diagnostic tool 9B in a direction along X axis perpendicular to the longitudinal direction of the diagnostic tool 9B. The second lateral acceleration data DAy is acceleration data of the diagnostic tool 9B in the direction perpendicular to the longitudinal direction of the diagnostic tool 9B and along Y axis, which is perpendicular to X axis.

Alternatively or additionally, the first acceleration data DA1 may include axial acceleration data DAz, which is acceleration data of the diagnostic tool 9B in the direction parallel to the longitudinal direction of the diagnostic tool 9B (in other words, a direction parallel to Z axis).

The diagnostic apparatus 8 may diagnose the presence or absence of the alignment abnormality between the automatic tool changer 30 and the tool spindle 2, based on at least the above-described lateral acceleration data (the first lateral acceleration data DAx or the second lateral acceleration data DAy). For example, in a case where a peak value of the first lateral acceleration data DAx or a peak value of the second lateral acceleration data DAy when the diagnostic tool 9B is transferred between the automatic tool changer 30 and the tool spindle 2 exceeds a first threshold TH1, the diagnostic apparatus 8 may determine the presence of the alignment abnormality between the automatic tool changer 30 and the tool spindle 2. In addition, in a case where both the peak value of the first lateral acceleration data DAx and the peak value of the second lateral acceleration data DAy when the diagnostic tool 9B is transferred between the automatic tool changer 30 and the tool spindle 2 are equal to or smaller than the first threshold TH1, the diagnostic apparatus 8 may determine the absence of the alignment abnormality between the automatic tool changer 30 and the tool spindle 2.

Alternatively or additionally, the diagnostic apparatus 8 may diagnose the presence or absence of the alignment abnormality between the automatic tool changer 30 and the tool spindle 2, based on at least the above-described axial acceleration data DAz. For example, in a case where a peak value of the axial acceleration data DAz when the diagnostic tool 9B is transferred between the automatic tool changer 30 and the tool spindle 2 exceeds a second threshold, the diagnostic apparatus 8 may determine the presence of the alignment abnormality between the automatic tool changer 30 and the tool spindle 2.

Alternatively or additionally, the diagnostic apparatus 8 may analyze the vibration frequency of the diagnostic tool 9B in the direction parallel to the longitudinal direction of the diagnostic tool 9B, based on at least one of the above-described first acceleration data DA1 and the above-described first vibration data DB1. FIG. 22 illustrates analysis results of the vibration frequency of the diagnostic tool 9B in the direction parallel to the longitudinal direction of the diagnostic tool 9B.

The diagnostic apparatus 8 may diagnose the presence or absence of the alignment abnormality between the automatic tool changer 30 and the tool spindle 2, based on the analysis results of the vibration frequency.

In an example illustrated in FIG. 22, the alignment abnormality between the automatic tool changer 30 and the tool spindle 2 results in vibrations continuous in a time series manner in a frequency band of about 40 Hz. FIG. 23 illustrates the state of the vibrations of the diagnostic tool 9B after the alignment between the automatic tool changer 30 and the tool spindle 2 has been adjusted. In an example illustrated in FIG. 23, the vibrations continuous in a time series manner in the frequency band of about 40 Hz are substantially lost. In the examples illustrated in FIGs. 22 and 23, by analyzing at least the vibration frequency of the diagnostic tool 9B in the direction parallel to the longitudinal direction of the diagnostic tool 9B, the diagnostic apparatus 8 is capable of diagnosing the presence or absence of the alignment abnormality between the automatic tool changer 30 and the tool spindle 2.

In the examples illustrated in FIGs. 15 to 20, the diagnostic apparatus 8 is capable of promptly detecting the alignment abnormality between the tool transfer apparatus 3 (more specifically, the automatic tool changer 30) and the tool spindle 2. For example, it is assumed that the misalignment amount between the tool transfer apparatus 3 (more specifically, the automatic tool changer 30) and the tool spindle 2 gradually increases due to a temporal change or an environmental change. In this case, before the misalignment amount reaches the one that causes a machine down situation, the diagnostic apparatus 8 is capable of detecting a slight alignment abnormality promptly. In addition, by making a maintenance plan based on a diagnosis result by the diagnostic apparatus 8, the user of the machine tool is able to avoid the machine down situation.

### (Detection of Angular Velocity of Diagnostic Tool 9B)

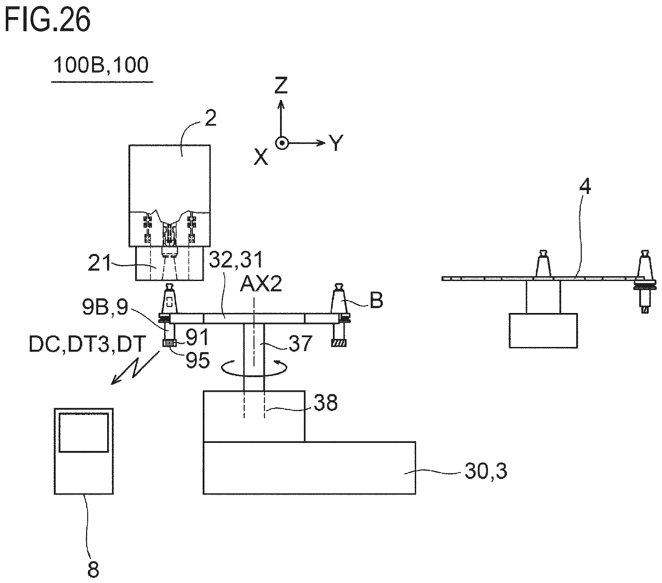

In an example illustrated in FIG. 26, the diagnostic apparatus 8 receives, from the sensor 91, the data DT indicating the physical quantity PV, which acts on the diagnostic tool 9B when the diagnostic tool 9B is transferred by the tool transfer apparatus 3 (more specifically, the automatic tool changer 30). The above-described data DT may include angular velocity data DC indicating an angular velocity that acts on the diagnostic tool 9B when the diagnostic tool 9B is transferred by the tool transfer apparatus 3 (more specifically, the automatic tool changer 30).

FIG. 21 illustrates an example of the data DT including the angular velocity data DC (in other words, an example of the data DT including the angular velocity data DC indicating the angular velocity that acts on the diagnostic tool 9B when the diagnostic tool 9B is transferred by the tool transfer apparatus 3).

The angular velocity data DC may include first angular velocity data DCx, which is angular velocity data of the diagnostic tool 9B around X axis. The angular velocity data DC may include second angular velocity data DCy, which is angular velocity data of the diagnostic tool 9B around Y axis. In addition, the angular velocity data DC may include third angular velocity data DCz, which is angular velocity data of the diagnostic tool 9B around the central axis AT of the diagnostic tool 9B.

The diagnostic apparatus 8 may diagnose the presence or absence of an abnormality in the tool transfer apparatus 3 (for example, the automatic tool changer 30), based on at least the above-described angular velocity data DC. For example, the diagnostic apparatus 8 may diagnose a rattling degree between a plurality of component elements that constitute the tool transfer apparatus 3, based on at least the above-described angular velocity data DC (the first angular velocity data DCx, the second angular velocity data DCy, or the third angular velocity data DCz).

As illustrated in FIG. 26, the above-described data DT may include the angular velocity data DC indicating an angular velocity that acts on the diagnostic tool 9B when the diagnostic tool 9B is rotated about the second axis AX2 by the automatic tool changer 30.

The diagnostic apparatus 8 may diagnose the presence or absence of the abnormality in the automatic tool changer 30, based on at least the above-described angular velocity data DC. For example, the diagnostic apparatus 8 may diagnose a rattling degree between the rotation shaft 37, which rotates together with the tool changing arm 32, and the shaft support portion 38, which supports the rotation shaft, based on at least the above-described angular velocity data DC (the first angular velocity data DCx, the second angular velocity data DCy, or the third angular velocity data DCz).

### (Transfer of Diagnostic Tool 9B between Tool Transfer Apparatus 3 and Tool Magazine 4)

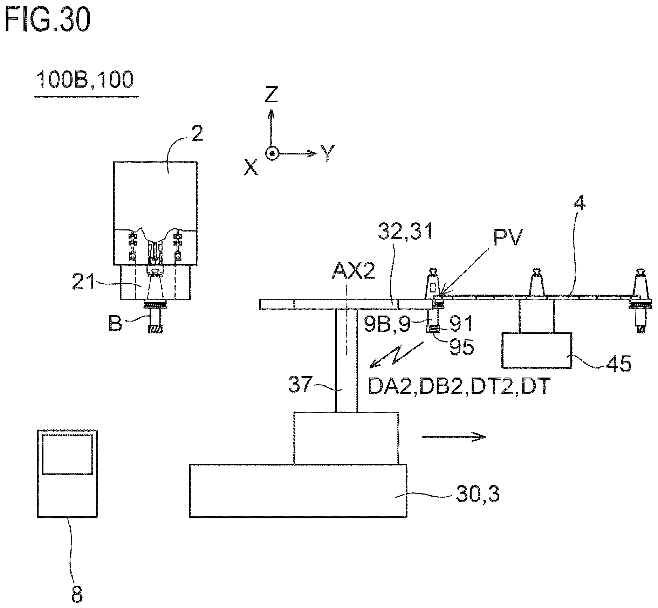

In an example illustrated in FIG. 30, the diagnostic apparatus 8 receives, from the sensor 91, the data DT indicating the physical quantity PV, which acts on the diagnostic tool 9B when the diagnostic tool 9B is transferred by the tool transfer apparatus 3 (more specifically, the automatic tool changer 30). The data DT includes second data DT2 indicating the physical quantity PV (for example, at least one of the acceleration and the vibration that acts on the diagnostic tool 9B), which is detected by the sensor 91 when the diagnostic tool 9B is transferred between the tool transfer apparatus 3 (more specifically, the automatic tool changer 30) and the tool magazine 4. In addition, the diagnostic apparatus 8 analyzes the second data DT2 to diagnose the presence or absence of the abnormality in the machine tool 100B. The diagnostic apparatus 8 may analyze the second data DT2 to diagnose the presence or absence of the alignment abnormality between the tool transfer apparatus 3 (more specifically, the automatic tool changer 30) and the tool magazine 4 (more specifically, whether the misalignment amount between the automatic tool changer 30 and the tool magazine 4 exceeds an allowable range).

In the example illustrated in FIG. 30, the above-described data DT (more specifically, the second data DT2) includes second acceleration data DA2 indicating the acceleration that acts on the diagnostic tool 9B when the diagnostic tool 9B is transferred between the tool transfer apparatus 3 (more specifically, the automatic tool changer 30) and the tool magazine 4. Alternatively or additionally, the above-described data DT (more specifically, the second data DT2) may include second vibration data DB2 indicating the vibration that acts on the diagnostic tool 9B when the diagnostic tool 9B is transferred between the tool transfer apparatus 3 (more specifically, the automatic tool changer 30) and the tool magazine 4.

In the example illustrated in FIG. 30, the diagnostic apparatus 8 analyzes the above-described second acceleration data DA2 to diagnose the presence or absence of an alignment abnormality between the tool transfer apparatus 3 (more specifically, the automatic tool changer 30) and the tool magazine 4. Alternatively or additionally, the diagnostic apparatus 8 may analyze the above-described second vibration data DB2 to diagnose the presence or absence of the alignment abnormality between the tool transfer apparatus 3 (more specifically, the automatic tool changer 30) and the tool magazine 4.

In the example illustrated in FIG. 30, the above-described second acceleration data DA2 includes data of acceleration that acts on the diagnostic tool 9B when the diagnostic tool 9B is stored in the tool magazine 4 from the tool transfer apparatus 3. Alternatively or additionally, the above-described second acceleration data DA2 may include data of acceleration that acts on the diagnostic tool 9B when the diagnostic tool 9B is removed from the tool magazine 4 to the tool transfer apparatus 3. In the example illustrated in FIG. 30, the above-described second vibration data DB2 includes data of vibration that acts on the diagnostic tool 9B when the diagnostic tool 9B is stored in the tool magazine 4 from the tool transfer apparatus 3. Alternatively or additionally, the above-described second vibration data DB2 may include data of vibration that acts on the diagnostic tool 9B when the diagnostic tool 9B is removed from the tool magazine 4 to the tool transfer apparatus 3.

As illustrated in FIG. 32, the diagnostic apparatus 8 may compare at least one of the second acceleration data DA2 and the second vibration data DB2 with reference data ND3 stored in the memory 82 to diagnose the presence or absence of the alignment abnormality between the tool transfer apparatus 3 (more specifically, the automatic tool changer 30) and the tool magazine 4. For example, in a case where the deviation of the second acceleration data DA2 (or the second vibration data DB2) from the reference data ND3 exceeds an allowable range, the diagnostic apparatus 8 determines the presence of the alignment abnormality between the tool transfer apparatus 3 (more specifically, the automatic tool changer 30) and the tool magazine 4. In addition, in a case where the deviation of the second acceleration data DA2 (or the second vibration data DB2) from the reference data ND3 falls within the allowable range, the diagnostic apparatus 8 determines the absence of the alignment abnormality between the tool transfer apparatus 3 (more specifically, the automatic tool changer 30) and the tool magazine 4.

Alternatively, A1 technology may be used to determine, by the diagnostic apparatus 8, the presence or absence of the above-described alignment abnormality. For example, (1) machine learning is performed with use of teacher data in which at least one of the acceleration data and the vibration data when the diagnostic tool 9B is transferred between the tool transfer apparatus 3 (more specifically, the automatic tool changer 30) and the tool magazine 4 is used as input data, and the presence or absence of the alignment abnormality between the tool transfer apparatus 3 (more specifically, the automatic tool changer 30) and the tool spindle 2 is used as output data. (2) The learned model obtained by machine learning is stored in the memory 82 of the diagnostic apparatus 8. (3) The diagnostic apparatus 8 inputs at least one of the above-described second acceleration data DA2 and the above-described second vibration data DB2 into the learned model stored in the memory 82, and acquires the presence or absence of the alignment abnormality between the tool transfer apparatus 3 (more specifically, the automatic tool changer 30) and the tool magazine 4, as the output data.

FIG. 21 illustrates an example of the data DT including the second acceleration data DA2 (more specifically, an example of the data DT including the second acceleration data DA2 indicating the acceleration that acts on the diagnostic tool 9B when the diagnostic tool 9B is transferred between the automatic tool changer 30 and the tool magazine 4).

In the example illustrated in FIG. 21, the second acceleration data DA2 includes the lateral acceleration data (more specifically, the first lateral acceleration data DAx and/or the second lateral acceleration data DAy), which is acceleration data of the diagnostic tool 9B in the direction perpendicular to the longitudinal direction of the diagnostic tool 9B.

Alternatively or additionally, the second acceleration data DA2 may include axial acceleration data DAz, which is acceleration data of the diagnostic tool 9B in the direction parallel to the longitudinal direction of the diagnostic tool 9B (in other words, a direction parallel to Z axis).

The diagnostic apparatus 8 may diagnose the presence or absence of the alignment abnormality between the automatic tool changer 30 and the tool magazine 4, based on at least the above-described lateral acceleration data (the first lateral acceleration data DAx or the second lateral acceleration data DAy). For example, in a case where a peak value of the first lateral acceleration data DAx or a peak value of the second lateral acceleration data DAy when the diagnostic tool 9B is transferred between the automatic tool changer 30 and the tool magazine 4 exceeds a third threshold TH3, the diagnostic apparatus 8 may determine the presence of the alignment abnormality between the automatic tool changer 30 and the tool magazine 4. In addition, in a case where both the peak value of the first lateral acceleration data DAx and the peak value of the second lateral acceleration data DAy when the diagnostic tool 9B is transferred between the automatic tool changer 30 and the tool magazine 4 is equal to or smaller than the third threshold TH3, the diagnostic apparatus 8 may determine the absence of the alignment abnormality between the automatic tool changer 30 and the tool magazine 4.

Alternatively or additionally, the diagnostic apparatus 8 may diagnose the presence or absence of the alignment abnormality between the automatic tool changer 30 and the tool magazine 4, based on at least the above-described axial acceleration data DAz. For example, in a case where the peak value of the axial acceleration data DAz when the diagnostic tool 9B is transferred between the automatic tool changer 30 and the tool magazine 4 exceeds a fourth threshold value, the diagnostic apparatus 8 may determine the presence of the alignment abnormality between the automatic tool changer 30 and the tool magazine 4.

Alternatively or additionally, the diagnostic apparatus 8 may analyze the vibration frequency of the diagnostic tool 9B, based on at least one of the above-described second acceleration data DA2 and the above-described second vibration data DB2. In addition, the diagnostic apparatus 8 may diagnose the presence or absence of the alignment abnormality between the automatic tool changer 30 and the tool magazine 4, based on an analysis result of the vibration frequency.

In the examples illustrated in FIGs. 30 and 32, the diagnostic apparatus 8 is capable of detecting the alignment abnormality between the tool transfer apparatus 3 (more specifically, the automatic tool changer 30) and the tool magazine 4 promptly. For example, it is assumed that the misalignment amount between the tool transfer apparatus 3 (more specifically, the automatic tool changer 30) and the tool magazine 4 gradually increases due to a temporal change or an environmental change. In this case, before the misalignment amount reaches the one that causes a machine down situation, the diagnostic apparatus 8 is capable of detecting a slight alignment abnormality promptly. In addition, by making a maintenance plan based on a diagnosis result by the diagnostic apparatus 8, the user of the machine tool is able to avoid the machine down situation.

### (Execution of Diagnostic Program 829a)

The diagnostic apparatus 8 executes the diagnostic program 829a, which is stored in the memory 82, to analyze the data DT indicating the physical quantity that acts on the diagnostic tool 9B when the diagnostic tool 9B is transferred by the tool transfer apparatus 3. For example, the diagnostic apparatus 8 analyzes the first data DT1 (for example, at least one of the above-described first acceleration data DA1 and the above-described first vibration data DB1) indicating the above-described physical quantity detected by the sensor 91 when the diagnostic tool 9B is transferred between the tool transfer apparatus 3 (more specifically, the automatic tool changer 30) and the tool spindle 2. Alternatively or additionally, the diagnostic apparatus 8 may analyze the second data DT2 (for example, at least one of the above-described second acceleration data DA2 and the above-described second vibration data DB2) indicating the physical quantity detected by the sensor 91 when the diagnostic tool 9B is transferred between the tool transfer apparatus 3 (more specifically, the automatic tool changer 30) and the tool magazine 4.

In addition, by executing the diagnostic program 829a, which is stored in the memory 82, the diagnostic apparatus 8 diagnoses the presence or absence of the abnormality in the machine tool 100B, based on the above-described analysis result of the data DT. For example, by executing the diagnostic program 829a, which is stored in the memory 82, the diagnostic apparatus 8 diagnoses the presence or absence of the alignment abnormality between the tool transfer apparatus 3 (more specifically, the automatic tool changer 30) and the tool spindle 2, based on the above-described analysis result of the first data DT1. Alternatively or additionally, by executing the diagnostic program 829a, which is stored in the memory 82, the diagnostic apparatus 8 may diagnose the presence or absence of the alignment abnormality between the tool transfer apparatus 3 (more specifically, the automatic tool changer 30) and the tool magazine 4, based on the above-described analysis result of the second data DT2.

By executing the diagnostic program 829a, which is stored in the memory 82, the diagnostic apparatus 8 may calculate a maintenance recommendation timing of the machine tool 100B, based on a temporal change of the above-described data DT. For example, the diagnostic apparatus 8 may calculate the maintenance recommendation timing of the machine tool 100B, based on a temporal change of the first data DT1 indicating the physical quantity detected by the sensor 91 when the diagnostic tool 9B is transferred between the automatic tool changer 30 and the tool spindle 2. In addition, the diagnostic apparatus 8 may calculate the maintenance recommendation timing of the machine tool 100B, based on a temporal change of the second data DT2 indicating the physical quantity detected by the sensor 91 when the diagnostic tool 9B is transferred between the automatic tool changer 30 and the tool magazine 4.

### (Execution of Display Program 829b)

By executing the display program 829b, which is stored in the memory 82, the diagnostic apparatus 8 may display, on the display device 84, a diagnosis result of the machine tool 100B by the diagnostic apparatus 8.

In an example illustrated in FIG. 33, by executing the display program 829b, which is stored in the memory 82, the diagnostic apparatus 8 displays the presence or absence of the abnormality in the machine tool 100B on the display device 84. The diagnostic apparatus 8 may display, on the display device 84, a message MG1 indicating the presence or absence of the alignment abnormality between the tool spindle 2 and the automatic tool changer 30. Alternatively or additionally, the diagnostic apparatus 8 may display, on the display device 84, a message MG2 indicating the presence or absence of the alignment abnormality between the tool magazine 4 and the automatic tool changer 30.

In the example illustrated in FIG. 33, by executing the display program 829b, which is stored in the memory 82, the diagnostic apparatus 8 displays, on the display device 84, the maintenance recommendation timing (more specifically, a predicted timing when a first alert is to be issued) of the machine tool 100B. The diagnostic apparatus 8 may calculate the maintenance recommendation timing of the machine tool 100B, based on the temporal change of the above-described first data DT1, and may display information IN1 indicating the calculated maintenance recommendation timing on the display device 84. In addition, the diagnostic apparatus 8 may calculate the maintenance recommendation timing of the machine tool 100B, based on the temporal change of the above-described second data DT2, and may display information IN2 indicating the calculated maintenance recommendation timing on the display device 84.

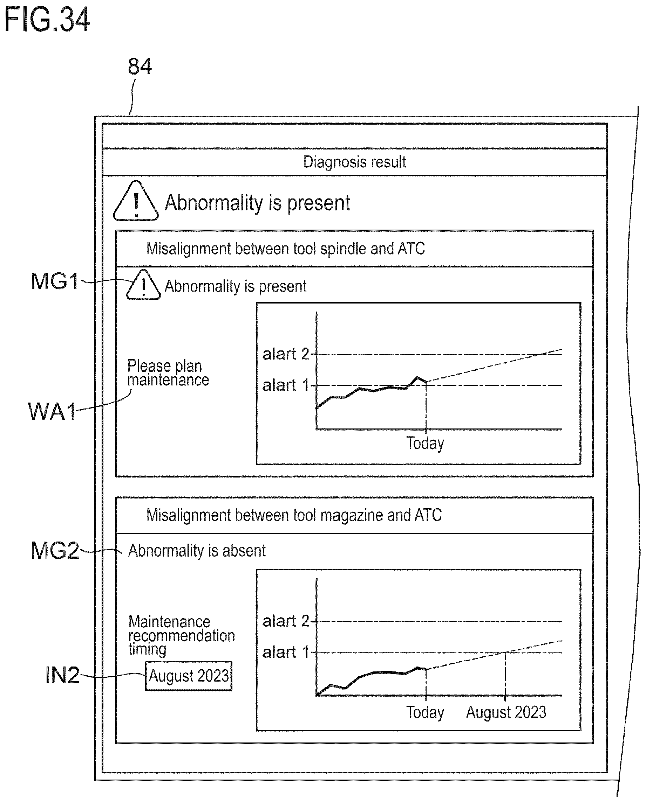

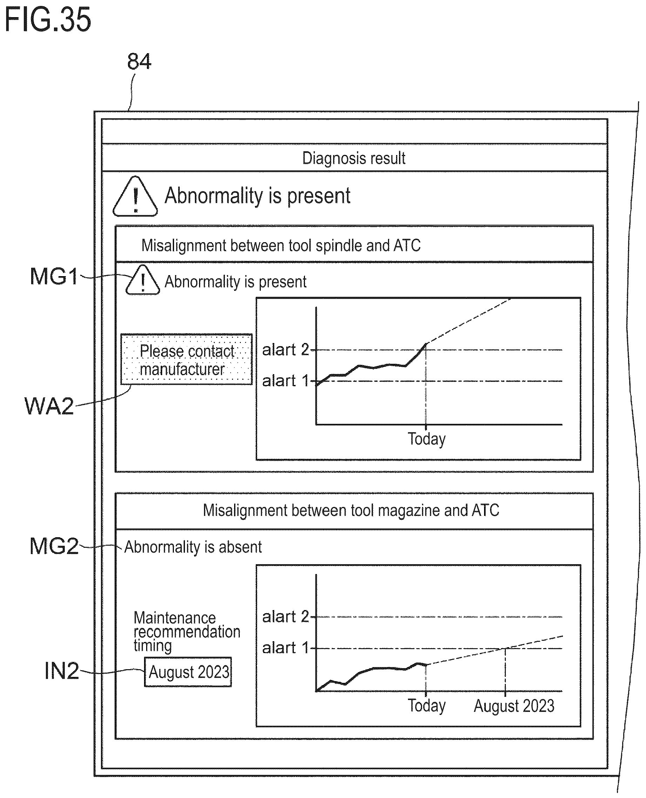

In a case where the deviation of the data DT from the reference data stored in the memory 82 (more specifically, the data DT indicating the physical quantity PV, which acts on the diagnostic tool 9B when the diagnostic tool 9B is transferred by the tool transfer apparatus 3) exceeds a first allowable range and the deviation falls within a second allowable range, the diagnostic apparatus 8 may display a first alert WA1 (see FIG. 34) on the display device 84. The first alert WA1 is, for example, an alert that draws the operator's attention (in other words, an alert of a light degree). In a case where the deviation of the data DT from the reference data stored in the memory 82 (more specifically, the data DT indicating the physical quantity PV, which acts on the diagnostic tool 9B when the diagnostic tool 9B is transferred by the tool transfer apparatus 3) exceeds the second allowable range, the diagnostic apparatus 8 may display a second alert WA2 (see FIG. 35) on the display device 84. The second alert WA2 is, for example, an alert that prompts contact with a machine tool maker or a maintenance dealer (in other words, an alert of a serious degree).

### (Machine Tool 100B)

The machine tool 100B is, for example, a multitasking machine capable of applying a plurality of types of machining to a workpiece. The machine tool 100B may be a machining center.

In the example illustrated in FIG. 11, the machine tool 100B includes the tool spindle 2, the tool transfer apparatus 3 (more specifically, the automatic tool changer 30), and the controller 5. The machine tool 100B may include the tool magazine 4 and/or a workpiece support 6, which supports a workpiece W.

The tool spindle 2, the tool transfer apparatus 3, and the tool magazine 4 have been described, and repeated description of the tool spindle 2, the tool transfer apparatus 3, and the tool magazine 4 will be omitted.

The controller 5 executes a machining program stored in the memory, and generates a control command. In addition, the controller 5 transmits the control command to a plurality of apparatuses to be controlled (for example, the rotation driver 25, the arm rotation apparatus 35, the mover 36, and the holding portion mover 45). As illustrated in FIG. 14, the controller 5 may include the above-described diagnostic apparatus 8. For example, the controller 5 may include the above-described memory 82, the above-described processor 83 (for example, the processor 83a), the above-described display device 84, the above-described input device 85, and the above-described communication circuit 86.

In the example illustrated in FIG. 14, the memory 82 may store a machining program 828. In addition, the processor 83 may execute the machining program 828, which is stored in the memory 82, and may generate a control command. Alternatively, the controller 5 may include a second processor different from the processor 83, and the second processor may execute the machining program. The control command that has been generated by the processor 83 (or the second processor) is transmitted to the plurality of apparatuses to be controlled (for example, the rotation driver 25, the arm rotation apparatus 35, the mover 36, and the holding portion mover 45).

Alternatively, the diagnostic apparatus 8 may be configured with a computer different from the controller 5. In an example illustrated in FIG. 36, the diagnostic apparatus 8 is communicably connected with the controller 5. The controller 5 may include: a second memory 52, which stores a machining program and the like; a second processor 53 (for example, the second processor 53a), which executes the machining program and generates a control command; and a second communication circuit 56, which transmits a control command CR to the plurality of apparatuses to be controlled (for example, the rotation driver 25, the arm rotation apparatus 35, the mover 36, and the holding portion mover 45). In addition, the controller 5 may include a second input device 55, which receives an input from the operator, and/or a second display 54, which displays various types of data.

### (Diagnostic Method for Machine Tool)

A diagnostic method for the machine tool in the embodiment will be described with reference to FIGs. 1 to 37.

In a first step ST1, a diagnostic tool 9 including a sensor 91 is prepared (see FIG. 7 or FIG. 13). The first step ST1 is a preparation step. The diagnostic tool 9, which is prepared in the preparation step is attachable to the tool spindle 2 (more specifically, the rotation body 21 of the tool spindle 2). In addition, the diagnostic tool 9, which is prepared in the preparation step, is transferrable by the tool transfer apparatus 3 (for example, the automatic tool changer 30) other than the tool spindle 2.

The diagnostic tool 9, which is prepared in the preparation step, may be a diagnostic tool 9A in the example not covered by the claims, may be the diagnostic tool 9B in the embodiment, or may be any other diagnostic tool. The diagnostic tool 9A in the example not covered by the claims and the diagnostic tool 9B in the embodiment have been described, and the repeated description of the diagnostic tools (9A and 9B) will be omitted.

The diagnostic tool 9, which is prepared in the preparation step, may be stored in the tool magazine 4.

In a second step ST2, the diagnostic tool 9 is transferred by the tool transfer apparatus 3. The second step ST2 is a transfer step. The transfer step may include transferring the diagnostic tool 9 by the automatic tool changer 30.

As illustrated in FIGs. 12, 15, and 16, the transfer step may include a first transfer step of transferring the diagnostic tool 9 from the tool magazine 4 to the tool spindle 2. At least part of the first transfer step is performed with use of the automatic tool changer 30.

Alternatively or additionally, as illustrated in FIGs. 24 to 31, the transfer step may include a second transfer step of transferring the diagnostic tool 9 from the tool spindle 2 to the tool magazine 4. At least part of the second transfer step is performed with use of the automatic tool changer 30.

In a third step ST3, the physical quantity PV, which acts on the diagnostic tool 9, is detected by the sensor 91. The third step ST3 is a detection step. In the detection step, the sensor 91 detects the physical quantity PV (examples including the acceleration that acts on the diagnostic tool 9, the angular velocity that acts on the diagnostic tool 9, and the vibration that acts on the diagnostic tool 9), which acts on the diagnostic tool 9 when the diagnostic tool 9 is transferred by the tool transfer apparatus 3. The physical quantity that acts on the diagnostic tool 9 is detected by the first sensor 91a (for example, the acceleration sensor) of the diagnostic tool 9 and/or the second sensor 91b (for example, the angular velocity sensor) of the diagnostic tool 9.

Upon receipt of a sensing start command by the diagnostic tool 9 from the diagnostic apparatus 8, the sensor 91 may start to detect the physical quantity PV. In addition, upon receipt of a sensing end command by the diagnostic tool 9 from the diagnostic apparatus 8, the sensor 91 may end detecting the physical quantity PV. The diagnostic apparatus 8 may transmit the sensing start command to the diagnostic tool 9, before the tool transfer apparatus 3 starts to transfer the diagnostic tool 9. Further, after the tool transfer apparatus 3 ends transferring the diagnostic tool 9, the diagnostic apparatus 8 may transmit the sensing end command to the diagnostic tool 9.

In a fourth step ST4, the data DT (for example, analog data or digital data) indicating the above-described physical quantity PV is transmitted to the diagnostic apparatus 8. The fourth step ST4 is a data transmission step. In the data transmission step, the data DT indicating the above-described physical quantity PV, which has been detected by the sensor 91, is transmitted from the sensor 91 to the diagnostic apparatus 8 via the transmission circuit 95. The diagnostic apparatus 8 stores the received data DT in the memory 82.

The transmission circuit 95 may transmit the data DT indicating the physical quantity PV, which has been detected by the sensor 91, to the diagnostic apparatus 8 in real time.

Alternatively, after the sensor 91 ends a series of detection of the physical quantity PV, the transmission circuit 95 may transmit the data DT indicating the physical quantity PV to the diagnostic apparatus 8. For example, the sensor 91 continuously detects the physical quantity PV, which acts on the diagnostic tool 9, for a period from the reception of the sensing start command to the reception of the sensing end command. The detected physical quantity PV (in other words, the data DT indicating the physical quantity PV) is stored in the memory 97 of the diagnostic tool 9. In addition, upon receipt of the sensing end command by the diagnostic tool 9, the transmission circuit 95 transmits the data DT indicating the physical quantity PV, which is stored in the memory 97, to the diagnostic apparatus 8.

It is to be noted that in a case where the diagnostic tool 9 does not include the transmission circuit 95, the fourth step ST4 is omitted. In this case, the data DT, which is stored in the memory 97, will be extracted later. Further, the data DT, which has been extracted from the memory 97 of the diagnostic tool 9, is stored in the memory 82 of the diagnostic apparatus 8.

In a fifth step ST5, the presence or absence of an abnormality in the machine tool 100B is diagnosed. The fifth step ST5 is a diagnosis step. In the diagnosis step, the presence or absence of the abnormality in the machine tool 100B is diagnosed, based on the physical quantity PV, which is detected by the sensor 91 (examples including the acceleration that acts on the diagnostic tool 9, the angular velocity that acts on the diagnostic tool 9, and the vibration that acts on the diagnostic tool 9) when the diagnostic tool 9 is transferred by the tool transfer apparatus 3. More specifically, the diagnosis step includes (1) receiving, by the diagnostic apparatus 8, the data DT indicating the physical quantity PV, which acts on the diagnostic tool 9 when the diagnostic tool 9 is transferred by the tool transfer apparatus 3, from the sensor 91 via the transmission circuit 95 or the memory 97, and (2) analyzing, by the diagnostic apparatus 8, the data DT to diagnose the presence or absence of the abnormality in the machine tool 100B. The diagnosis step may include (3) displaying, by the diagnostic apparatus 8, the presence or absence of the abnormality in the machine tool 100B on the display device 84.

The detection step (the third step ST3) may include detecting, by the sensor 91 of the diagnostic tool 9, the physical quantity PV, which acts on the diagnostic tool 9 (examples including the acceleration that acts on the diagnostic tool 9, the angular velocity that acts on the diagnostic tool 9, and the vibration that acts on the diagnostic tool 9) when the diagnostic tool 9 is transferred between the automatic tool changer 30 and the tool spindle 2. In addition, (1) the diagnostic step (the fifth step ST5) may include (1) receiving, by the diagnostic apparatus 8, the first data DT1 (for example, see FIGs. 16 and 19) indicating the physical quantity PV, which acts on the diagnostic tool 9 when the diagnostic tool 9 is transferred between the automatic tool changer 30 and the tool spindle 2, from the sensor 91 via the transmission circuit 95 or the memory 97, and (2) analyzing, by the diagnostic apparatus 8, the first data DT1 to diagnose the presence or absence of the abnormality in the machine tool 100B.

In the example illustrated in FIGs. 15 and 16, the detection step (the third step ST3) includes detecting, by the sensor 91 of the diagnostic tool 9, the physical quantity PV, which acts on the diagnostic tool 9 (examples including the acceleration that acts on the diagnostic tool 9, the angular velocity that acts on the diagnostic tool 9, and the vibration that acts on the diagnostic tool 9) when the diagnostic tool 9 is attached to the tool spindle 2.

Further, in the example illustrated in FIG. 16, the diagnosis step (the fifth step ST5) includes (1) receiving, by the diagnostic apparatus 8, the first data DT1 indicating the physical quantity PV, which acts on the diagnostic tool 9 when the diagnostic tool 9 is attached to the tool spindle 2, from the sensor 91 via the transmission circuit 95 or the memory 97, and (2) analyzing, by the diagnostic apparatus 8, the first data DT1 to diagnose the presence or absence of the alignment abnormality between the automatic tool changer 30 and the tool spindle 2 (more specifically, to diagnose whether the misalignment amount between the automatic tool changer 30 and the tool spindle 2 exceeds an allowable range).

The diagnosis step (the fifth step ST5) may include (1) receiving, by the diagnostic apparatus 8, the first acceleration data DA1 indicating the acceleration that acts on the diagnostic tool 9 when the diagnostic apparatus 8 is attached to the tool spindle 2, from the sensor 91, and (2) analyzing, by the diagnostic apparatus 8, the first acceleration data DA1 to diagnose the presence or absence of the alignment abnormality between the automatic tool changer 30 and the tool spindle 2. Alternatively or additionally, the diagnosis step (the fifth step ST5) may include (1) receiving, by the diagnostic apparatus 8, the first vibration data DB 1 indicating the vibration that acts on the diagnostic tool 9 when the diagnostic tool 9 is attached to the tool spindle 2, from the sensor 91, and (2) analyzing, by the diagnostic apparatus 8, the first vibration data DB1 to diagnose the presence or absence of the alignment abnormality between the automatic tool changer 30 and the tool spindle 2.

In the examples illustrated in FIGs. 18 and 19, the detection step (the third step ST3) includes detecting, by the sensor 91 of the diagnostic tool 9, the physical quantity PV, which acts on the diagnostic tool 9 (examples including the acceleration that acts on the diagnostic tool 9, the angular velocity that acts on the diagnostic tool 9, and the vibration that acts on the diagnostic tool 9) when the diagnostic tool 9 is transferred from the tool spindle 2 to the automatic tool changer 30.

In the example illustrated in FIG. 19, (1) the diagnosis step (the fifth step ST5) includes receiving, by the diagnostic apparatus 8, the first data DT1 indicating the physical quantity PV, which acts on the diagnostic tool 9 when the diagnostic tool 9 is transferred from the tool spindle 2 to the automatic tool changer 30, from the sensor 91 via the transmission circuit 95 or the memory 97, and (2) diagnosing, by the diagnostic apparatus 8, the presence or absence of the alignment abnormality between the automatic tool changer 30 and the tool spindle 2 (more specifically, diagnosing whether the misalignment amount between the automatic tool changer 30 and the tool spindle 2 exceeds an allowable range.

The diagnosis step (the fifth step ST5) may include (1) receiving, by the diagnostic apparatus 8, the first acceleration data DA1 indicating the acceleration that acts on the diagnostic tool 9 when the diagnostic tool 9 is transferred from the tool spindle 2 to the automatic tool changer 30, from the sensor 91, and (2) analyzing, by the diagnostic apparatus 8, the first acceleration data DA1 (see FIG. 21) to diagnose the presence or absence of the alignment abnormality between the automatic tool changer 30 and the tool spindle 2. Alternatively or additionally, the diagnosis step (the fifth step ST5) may include (1) receiving, by the diagnostic apparatus 8, the first vibration data DB 1 indicating the vibration that acts on the diagnostic tool 9 when the diagnostic tool 9 is transferred from the tool spindle 2 to the automatic tool changer 30, from the sensor 91, and (2) analyzing, by the diagnostic apparatus 8, the first vibration data DB1 to diagnose the presence or absence of the alignment abnormality between the automatic tool changer 30 and the tool spindle 2.

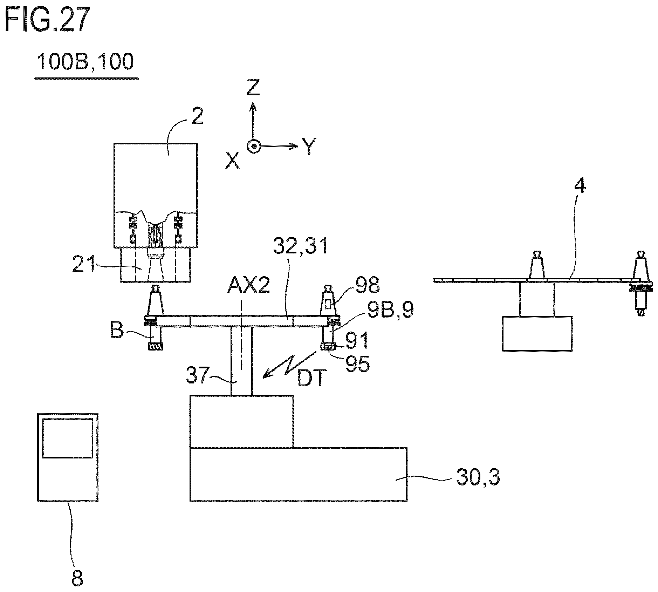

As illustrated in FIGs. 26 and 27, the detection step (the third step ST3) may include detecting, by the sensor 91 of the diagnostic tool 9, the physical quantity PV, which acts on the diagnostic tool 9 (examples including the acceleration that acts on the diagnostic tool 9, the angular velocity that acts on the diagnostic tool 9, and the vibration that acts on the diagnostic tool 9) when the automatic tool changer 30 rotates the diagnostic tool 9 about the second axis AX2.

In addition, the diagnosis step (the fifth step ST5) may include (1) receiving, by the diagnostic apparatus 8, third data DT3 indicating the physical quantity PV, which acts on the diagnostic tool 9 (examples including the acceleration that acts on the diagnostic tool 9, the angular velocity that acts on the diagnostic tool 9, and the vibration that acts on the diagnostic tool 9) when the diagnostic tool 9 is rotated about the second axis AX2, from the sensor 91 via the transmission circuit 95 or the memory 97, and (2) analyzing, by the diagnostic apparatus 8, the third data DT3 (see FIG. 21) to diagnose the presence or absence of the abnormality in the machine tool 100B (for example, to diagnose, by the diagnostic apparatus 8, a rattling degree between the rotation shaft 37, which rotates together with the tool change arm 32, and the shaft support portion 38, which supports the rotation shaft 37).

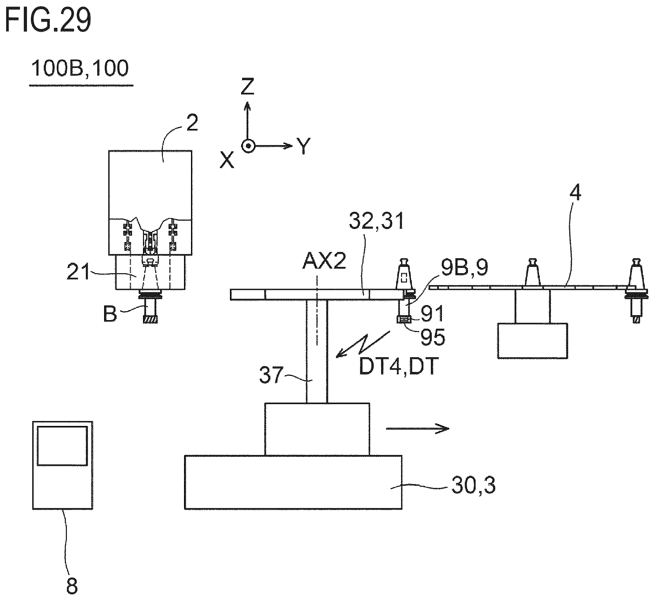

As illustrated in FIG. 29, the detection step (the third step ST3) may include detecting, by the sensor 91 of the diagnostic tool 9, the physical quantity PV, which acts on the diagnostic tool 9 (examples including the acceleration that acts on the diagnostic tool 9, the angular velocity that acts on the diagnostic tool 9, and the vibration that acts on the diagnostic tool 9) when the automatic tool changer 30 moves the diagnostic tool 9 in the direction perpendicular to the second axis AX2.

Further, the diagnosis step (the fifth step ST5) may include (1) receiving, by the diagnostic apparatus 8, fourth data DT4 indicating the physical quantity PV, which acts on the diagnostic tool 9 (examples including the acceleration that acts on the diagnostic tool 9, the angular velocity that acts on the diagnostic tool 9, and the vibration that acts on the diagnostic tool 9) when the diagnostic tool 9 is moved in the direction perpendicular to the second axis AX2, from the sensor 91 via the transmission circuit 95 or the memory 97, and (2) analyzing, by the diagnostic apparatus 8, the fourth data DT4 (see FIG. 21) to diagnose the presence or absence of the abnormality in the machine tool (for example, the diagnostic apparatus 8 diagnoses a rattling degree between the component elements in the mechanism for linearly moving the tool change arm 32).

As illustrated in FIG. 30, the detection step (the third step ST3) may include detecting, by the sensor 91 of the diagnostic tool 9, the physical quantity PV, which acts on the diagnostic tool 9 (examples including the acceleration that acts on the diagnostic tool 9, the angular velocity that acts on the diagnostic tool 9, and the vibration that acts on the diagnostic tool 9) when the diagnostic tool 9 is transferred between the automatic tool changer 30 and the tool magazine 4.

In addition, the diagnostic step (the fifth step ST5) may include (1) receiving, by the diagnostic apparatus 8, the second data DT2 indicating the physical quantity PV, which acts on the diagnostic tool 9 when the diagnostic tool 9 is transferred between the automatic tool changer 30 and the tool magazine 4, from the sensor 91 via the transmission circuit 95 or the memory 97, and (2) analyzing, by the diagnostic apparatus 8, the second data DT2 to diagnose the presence or absence of the abnormality in the machine tool (more specifically, the diagnostic apparatus 8 diagnoses the presence or absence of the alignment abnormality between the automatic tool changer 30 and the tool magazine 4).

The diagnosis step (the fifth step ST5) may include (1) receiving, by diagnostic apparatus 8, the second acceleration data DA2, which acts on the diagnostic tool 9 when the diagnostic tool 9 is transferred between the automatic tool changer 30 and the tool magazine 4, from the sensor 91, and (2) analyzing, by diagnostic apparatus 8, the second acceleration data DA2 (see FIG. 21) to diagnose the presence or absence of the alignment abnormality between the automatic tool changer 30 and the tool magazine 4. Alternatively or additionally, the diagnosis step (the fifth step ST5) may include (1) receiving, by the diagnostic apparatus 8, the second vibration data DB2 indicating the vibration that acts on the diagnostic tool 9 when the diagnostic tool 9 is transferred between the automatic tool changer 30 and the tool magazine 4, from the sensor 91a, and (2) analyzing, by the diagnostic apparatus 8, the second vibration data DB2 to diagnose the presence or absence of the alignment abnormality between the automatic tool changer 30 and the tool magazine 4.

A diagnosis result of the machine tool 100B by the diagnostic apparatus 8 may be uploaded to a cloud managed by a machine tool manufacturer or a maintenance dealer.

In the example illustrated in FIG. 33, the diagnosis step (the fifth step ST5) includes displaying, by diagnostic apparatus 8, the presence or absence of the abnormality in the machine tool 100B on the display device 84. The diagnostic apparatus 8 may display, on the display device 84, the message MG1 indicating the presence or absence of the alignment abnormality between the tool spindle 2 and the automatic tool changer 30. Alternatively or additionally, the diagnostic apparatus 8 may display, on the display device 84, the message MG2 indicating the presence or absence of the alignment abnormality between the tool magazine 4 and the automatic tool changer 30.

The diagnostic apparatus 8 may display, on the display device 84, the maintenance recommendation timing (more specifically, the predicted time when the first alert is to be issued) of the machine tool 100B. The maintenance recommendation timing is calculated by the diagnostic apparatus 8, based on the temporal change of the above-described data DT.

The diagnostic apparatus 8 may display, on the display device 84, the first alert WA1 (see FIG. 34), in a case where the deviation of the data DT (more specifically, the data DT indicating the physical quantity PV, which acts on the diagnostic tool 9 when the diagnostic tool 9 is transferred by the tool transfer apparatus 3) from the reference data stored in the memory 82 exceeds the first allowable range and the deviation falls within the second allowable range. The first alert WA1 is, for example, an alert that draws the operator's attention. The diagnostic apparatus 8 may display, on the display device 84, the second alert WA2 (see FIG. 35), in a case where the deviation of the data DT (more specifically, the data DT indicating the physical quantity PV, which acts on the diagnostic tool 9 when the diagnostic tool 9 is transferred by the tool transfer apparatus 3) from the reference data stored in the memory 82 exceeds the second allowable range. The second alert WA2 is, for example, an alert that prompts contact with a machine tool maker or a maintenance dealer.

When the alert (for example, the first alert WA1 or the second alert WA2) that notifies the abnormality in the machine tool 100B is displayed on the display device 84, the occurrence of such an alert may be automatically notified to the machine tool manufacturer or the maintenance dealer. In this case, the machine tool manufacturer or the maintenance dealer that receives the notification is able to guide the user of the machine tool 100B future measures.

The diagnostic method for the machine tool in the embodiment (more specifically, the above-described second step ST2 to the above-described fifth step ST5) is preferably performed, while a workpiece is not being machined by the machine tool 100B. The diagnostic method for the machine tool in the embodiment (more specifically, the above-described second step ST2 to the above-described fifth step ST5) may be performed when the machine tool 100B starts up. The diagnostic method for the machine tool in the embodiment (more specifically, the above-described second step ST2 to the above-described fifth step ST5) may be performed, after a first workpiece is machined by the machine tool 100B and before a next workpiece is machined by the machine tool 100B. The diagnostic method for the machine tool in the embodiment (more specifically, the above-described second step ST2 to the above-described fifth step ST5) may be performed every day, may be performed once several days, or may be performed once several tens of days.

### Reference Signs List

2 ... Tool spindle, 3 ... Tool transfer apparatus, 4 ... Tool magazine, 5 ... Controller, 6 ... Workpiece support, 8 ... Diagnostic apparatus, 9, 9A, 9B ... Diagnostic tool, 21 ... Rotation body, 23 ... Support, 24 ... Bearing, 25 ... Rotation driver, 25r ... Rotor, 25s ... Stator, 30 ... Automatic tool changer, 31 ... Holder, 32 ... Tool change arm, 32a ... First arm, 32b ... Second arm, 33a ... First gripper, 33b ... Second gripper, 35 ... Arm rotation apparatus, 36 ... Mover, 36a ... First mover, 36b ... Second mover, 37 ... Rotation shaft, 38 ... Shaft support portion, 41 ... Holding portion, 45 ... Holding portion mover, 52 ... Second memory, 53 ... Second processor, 53a ... Second processor, 54 ... Second display, 55 ... Second input device, 56 ... Second communication circuit, 82 ... Memory, 83 ... Processor, 83a ... Processor, 84 ... Display device, 85, 85a, 85 ... Input device, 86 ... Communication circuit, 87 ... Bus, 91 ... Sensor, 91a ... First sensor, 91b ... Second sensor, 93 ... First portion, 94 ... Second portion, 94v ... Annular groove, 95 ... Transmission circuit, 96 ... Reception circuit, 97 ... Memory, 98 ... Battery, 99 ... Conductive wire member, 100, 100A, 100B ... Machine tool, 828 ... Machining program, 829 ... Program, 829a ... Diagnostic program, 829b ... Display program, 841 ... Display provided with touch panel, B ... Tool, CR ... Control command, DA1 ... First acceleration data, DA2 ... Second acceleration data, DAx ... First lateral acceleration data, DAy ... Second vibration data, DAz ... Axial acceleration data, DB1 ... First vibration data, DB2 ... Second vibration data, DC ... Angular velocity data, DCx ... First angular velocity data, DCy ... Second angular velocity data, DCz ... Third angular velocity data, DT ... Data, DT1, DT1-1, DT1-2 ... First data, DT2 ... Second data, DT3 ... Third data, DT4 ... Fourth data, IN1, IN2 ... Information indicating maintenance recommendation timing of machine tool, MG1, MG2 ... Message, ND1, ND2, ND3 ... Reference data, W ... Workpiece, WA1 ... First alert, WA2 ... Second alert

## Claims

1. A machine tool (100, 100A, 100B) comprising:
a tool spindle (2) capable of holding a diagnostic tool (9, 9A, 9B) including a sensor (91, 91a, 91b);
a tool transfer apparatus (3) provided separately from the tool spindle (2), the tool transfer apparatus (3) being capable of transferring the diagnostic tool (9, 9A, 9B), wherein the tool transfer apparatus (3) includes an automatic tool changer (30); and
a diagnostic apparatus (8) configured to receive, from the sensor (91, 91a, 91b), data indicating a physical quantity that acts on the diagnostic tool (9, 9A, 9B) when the diagnostic tool (9, 9A, 9B) is transferred by the tool transfer apparatus (3), and configured to analyze the data to diagnose presence or absence of an abnormality in the machine tool (100, 100A, 100B),
wherein the data includes at least one of:
first acceleration data (DA1) indicating acceleration that acts on the diagnostic tool (9, 9A, 9B) when the diagnostic tool (9, 9A, 9B) is transferred between the automatic tool changer (30) and the tool spindle (2); and
first vibration data (DB1) indicating vibration that acts on the diagnostic tool (9, 9A, 9B) when the diagnostic tool (9, 9A, 9B) is transferred between the automatic tool changer (30) and the tool spindle (2), and
wherein the diagnostic apparatus (8) is configured to analyze at least one of the first acceleration data (DA1) and the first vibration data (DB1) to diagnose presence or absence of an alignment abnormality between the automatic tool changer (30) and the tool spindle (2).

2. The machine tool (100, 100A, 100B) according to claim 1,
wherein the data includes first data indicating a physical quantity detected by the sensor (91, 91a, 91b) when the diagnostic tool (9, 9A, 9B) is transferred between the tool transfer apparatus (3) and the tool spindle (2), and
wherein the diagnostic apparatus (8) is configured to analyze the first data to diagnose the presence or the absence of the abnormality in the machine tool (100, 100A, 100B).

3. The machine tool (100, 100A, 100B) according to claim 1 or 2,
wherein the first acceleration data (DA1) includes lateral acceleration data (DAx) that is acceleration data of the diagnostic tool (9, 9A, 9B) in a direction perpendicular to a longitudinal direction of the diagnostic tool (9, 9A, 9B), and
wherein the diagnostic apparatus (8) is configured to diagnose the presence or the absence of the alignment abnormality, based on at least the lateral acceleration data (DAx).

4. The machine tool (100, 100A, 100B) according to one of claims 1 to 3,
wherein the first acceleration data (DA1) includes axial acceleration data (DAz) that is acceleration data of the diagnostic tool (9, 9A, 9B) in a direction parallel to a longitudinal direction of the diagnostic tool (9, 9A, 9B), and
wherein the diagnostic apparatus (8) is configured to diagnose the presence or the absence of the alignment abnormality, based on at least the axial acceleration data (DAz).

5. The machine tool (100, 100A, 100B) according to one of claims 1 to 4,
wherein the diagnostic apparatus (8) is configured to analyze a vibration frequency of the diagnostic tool (9, 9A, 9B) in a direction parallel to a longitudinal direction of the diagnostic tool (9, 9A, 9B), based on at least one of the first acceleration data (DA1) and the first vibration data (DB1), and
wherein the diagnostic apparatus (8) is configured to diagnose the presence or the absence of the alignment abnormality, based on an analysis result of the vibration frequency.

6. The machine tool (100, 100A, 100B) according to one of claims 1 to 5,
wherein the data includes angular velocity data (DC) indicating an angular velocity that acts on the diagnostic tool (9, 9A, 9B) when the diagnostic tool (9, 9A, 9B) is transferred by the tool transfer apparatus (3), and
wherein the diagnostic apparatus (8) is configured to analyze the angular velocity data (DC) to diagnose the presence or the absence of the abnormality in the tool transfer apparatus (3).

7. The machine tool (100, 100A, 100B) according to one of claims 1 to 6, further comprising a tool magazine (4),
wherein the data includes at least one of:
second acceleration data (DA2) indicating acceleration that acts on the diagnostic tool (9, 9A, 9B) when the diagnostic tool (9, 9A, 9B) is transferred between the tool transfer apparatus (3) and the tool magazine (4); and
second vibration data (DB2) indicating vibration that acts on the diagnostic tool (9, 9A, 9B) when the diagnostic tool (9, 9A, 9B) is transferred between the tool transfer apparatus (3) and the tool magazine (4), and
wherein the diagnostic apparatus (8) is configured to analyze at least one of the second acceleration data (DA2) and the second vibration data (DB2) to diagnose presence or absence of an alignment abnormality between the tool transfer apparatus (3) and the tool magazine (4).

8. The machine tool (100, 100A, 100B) according to one of claims 1 to 7, further comprising a display device (84),
wherein the diagnostic apparatus (8) is configured to calculate a maintenance recommendation timing of the machine tool (100, 100A, 100B), based on a temporal change of the data, and
wherein the diagnostic apparatus (8) is configured to display the maintenance recommendation timing on the display device (84).

9. The machine tool (100, 100A, 100B) according to one of claims 1 to 7, further comprising a display device (84),
wherein the diagnostic apparatus (8) is configured to display a first alert on the display device (84), in a case where deviation of the data from reference data (ND1, ND2, ND3) exceeds a first allowable range and falls within a second allowable range, and
wherein the diagnostic apparatus (8) is configured to display a second alert on the display device, in a case where the deviation of the data from the reference data (ND1, ND2, ND3) exceeds the second allowable range.

10. A diagnostic method for a machine tool (100, 100A, 100B), the diagnostic method comprising:
a step (ST1) of preparing a diagnostic tool (9, 9A, 9B) including a sensor (91, 91a, 91b), the diagnostic tool (9, 9A, 9B) being attachable to a tool spindle (2) of the machine tool (100, 100A, 100B), the diagnostic tool (9, 9A, 9B) being transferrable by a tool transfer apparatus (3) other than the tool spindle (2), wherein the tool transfer apparatus (3) includes an automatic tool changer (30);
a step (ST2) of transferring the diagnostic tool (9, 9A, 9B), by the tool transfer apparatus (3);
a step (ST3) of detecting, by the sensor (91, 91a, 91b), a physical quantity that acts on the diagnostic tool (9, 9A, 9B) when the diagnostic tool (9, 9A, 9B) is transferred by the tool transfer apparatus (3); and
a step (ST5) of diagnosing presence or absence of an abnormality in the machine tool (100, 100A, 100B), based on the physical quantity detected by the sensor (91, 91a, 91b) when the diagnostic tool (9, 9A, 9B) is transferred by the tool transfer apparatus (3),
wherein the physical quantity comprises at least one of:
first acceleration data (DA1) indicating acceleration that acts on the diagnostic tool (9, 9A, 9B) when the diagnostic tool (9, 9A, 9B) is transferred between the automatic tool changer (30) and the tool spindle (2); and
first vibration data (DB1) indicating vibration that acts on the diagnostic tool (9, 9A, 9B) when the diagnostic tool (9, 9A, 9B) is transferred between the automatic tool changer (30) and the tool spindle (2), and
wherein the step of diagnosing comprises to analyze at least one of the first acceleration data (DA1) and the first vibration data (DB1) to diagnose presence or absence of an alignment abnormality between the automatic tool changer (30) and the tool spindle (2).

## Patentansprüche

1. Werkzeugmaschine (100, 100A, 100B) umfassend:
eine Werkzeugspindel (2), die ein Diagnosewerkzeug (9, 9A, 9B) mit einem Sensor (91, 91a, 91b) halten kann;
eine Werkzeugtransfervorrichtung (3), die getrennt von der Werkzeugspindel (2) vorgesehen ist, wobei die Werkzeugtransfervorrichtung (3) das Diagnosewerkzeug (9, 9A, 9B) übertragen kann, wobei die Werkzeugtransfervorrichtung (3) einen automatischen Werkzeugwechsler (30) aufweist; und
eine Diagnosevorrichtung (8), die dazu eingerichtet ist, um vom Sensor (91, 91a, 91b) Daten zu empfangen, die eine physikalische Größe angeben, die auf das Diagnosewerkzeug (9, 9A, 9B) wirkt, wenn das Diagnosewerkzeug (9, 9A, 9B) von der Werkzeugtransfervorrichtung (3) übertragen wird, und die dazu eingerichtet ist, um die Daten zu analysieren, um das Vorliegen oder Nichtvorliegen einer Anomalie in der Werkzeugmaschine (100, 100A, 100B) zu diagnostizieren,
wobei die Daten mindestens eines der Folgenden umfassen:
erste Beschleunigungsdaten (DA1), die die Beschleunigung angeben, die auf das Diagnosewerkzeug (9, 9A, 9B) wirkt, wenn das Diagnosewerkzeug (9, 9A, 9B) zwischen dem automatischen Werkzeugwechsler (30) und der Werkzeugspindel (2) übertragen wird; und
erste Schwingungsdaten (DB1), die die Schwingungen angeben, die auf das Diagnosewerkzeug (9, 9A, 9B) wirken, wenn das Diagnosewerkzeug (9, 9A, 9B) zwischen dem automatischen Werkzeugwechsler (30) und der Werkzeugspindel (2) übertragen wird, und
wobei die Diagnosevorrichtung (8) dazu eingerichtet ist, um mindestens eines von den ersten Beschleunigungsdaten (DA1) und den ersten Schwingungsdaten (DB1) zu analysieren, um das Vorliegen oder Nichtvorliegen einer Ausrichtungsanomalie zwischen dem automatischen Werkzeugwechsler (30) und der Werkzeugspindel (2) zu diagnostizieren.

2. Werkzeugmaschine (100, 100A, 100B) nach Anspruch 1,
wobei die Daten erste Daten umfassen, die eine vom Sensor (91, 91a, 91b) erfasste physikalische Größe angeben, wenn das Diagnosewerkzeug (9, 9A, 9B) zwischen der Werkzeugtransfervorrichtung (3) und der Werkzeugspindel (2) übertragen wird, und
wobei die Diagnosevorrichtung (8) dazu eingerichtet ist, um die ersten Daten zu analysieren, um das Vorliegen oder Nichtvorliegen der Anomalie in der Werkzeugmaschine (100, 100A, 100B) zu diagnostizieren.

3. Werkzeugmaschine (100, 100A, 100B) nach Anspruch 1 oder 2,
wobei die ersten Beschleunigungsdaten (DA1) Querbeschleunigungsdaten (DAx) umfassen, bei denen es sich um Beschleunigungsdaten des Diagnosewerkzeugs (9, 9A, 9B) in einer Richtung senkrecht zu einer Längsrichtung des Diagnosewerkzeugs (9, 9A, 9B) handelt, und
wobei die Diagnosevorrichtung (8) dazu eingerichtet ist, um das Vorliegen oder Nichtvorliegen der Ausrichtungsanomalie auf der Grundlage zumindest der Querbeschleunigungsdaten (DAx) zu diagnostizieren.

4. Werkzeugmaschine (100, 100A, 100B) nach einem der Ansprüche 1 bis 3,
wobei die ersten Beschleunigungsdaten (DA1) axiale Beschleunigungsdaten (DAz) aufweisen, bei denen es sich um Beschleunigungsdaten des Diagnosewerkzeugs (9, 9A, 9B) in einer Richtung parallel zu einer Längsrichtung des Diagnosewerkzeugs (9, 9A, 9B) handelt, und
wobei die Diagnosevorrichtung (8) dazu eingerichtet ist, um das Vorliegen oder Nichtvorliegen der Ausrichtungsanomalie auf der Grundlage zumindest der axialen Beschleunigungsdaten (DAz) zu diagnostizieren.

5. Werkzeugmaschine (100, 100A, 100B) nach einem der Ansprüche 1 bis 4,
wobei die Diagnosevorrichtung (8) dazu eingerichtet ist, um auf der Grundlage mindestens eines von den ersten Beschleunigungsdaten (DA1) und den ersten Schwingungsdaten (DB1) eine Schwingungsfrequenz des Diagnosewerkzeugs (9, 9A, 9B) in einer Richtung parallel zu einer Längsrichtung des Diagnosewerkzeugs (9, 9A, 9B) zu analysieren, und
wobei die Diagnosevorrichtung (8) eingerichtet ist, um das Vorliegen oder Nichtvorliegen der Ausrichtungsanomalie auf der Grundlage eines Analyseergebnisses der Schwingungsfrequenz zu diagnostizieren.

6. Werkzeugmaschine (100, 100A, 100B) nach einem der Ansprüche 1 bis 5,
wobei die Daten Winkelgeschwindigkeitsdaten (DC) umfassen, die eine Winkelgeschwindigkeit angeben, die auf das Diagnosewerkzeug (9, 9A, 9B) wirkt, wenn das Diagnosewerkzeug (9, 9A, 9B) von der Werkzeugtransfervorrichtung (3) übertragen wird, und
wobei die Diagnosevorrichtung (8) dazu eingerichtet ist, um die Winkelgeschwindigkeitsdaten (DC) zu analysieren, um das Vorliegen oder Nichtvorliegen der Anomalie in der Werkzeugtransfervorrichtung (3) zu diagnostizieren.

7. Werkzeugmaschine (100, 100A, 100B) nach einem der Ansprüche 1 bis 6, ferner umfassend ein Werkzeugmagazin (4),
wobei die Daten mindestens eines der Folgenden umfassen:
zweite Beschleunigungsdaten (DA2), die die Beschleunigung angeben, die auf das Diagnosewerkzeug (9, 9A, 9B) wirkt, wenn das Diagnosewerkzeug (9, 9A, 9B) zwischen der Werkzeugtransfervorrichtung (3) und dem Werkzeugmagazin (4) übertragen wird; und
zweite Schwingungsdaten (DB2), die die Schwingungen angeben, die auf das Diagnosewerkzeug (9, 9A, 9B) wirken, wenn das Diagnosewerkzeug (9, 9A, 9B) zwischen der Werkzeugtransfervorrichtung (3) und dem Werkzeugmagazin (4) übertragen wird, und
wobei die Diagnosevorrichtung (8) dazu eingerichtet ist, um mindestens eines von den zweiten Beschleunigungsdaten (DA2) und den zweiten Schwingungsdaten (DB2) zu analysieren, um das Vorliegen oder Nichtvorliegen einer Ausrichtungsanomalie zwischen der Werkzeugtransfervorrichtung (3) und dem Werkzeugmagazin (4) zu diagnostizieren.

8. Werkzeugmaschine (100, 100A, 100B) nach einem der Ansprüche 1 bis 7, ferner umfassend eine Anzeigevorrichtung (84),
wobei die Diagnosevorrichtung (8) dazu eingerichtet ist, um auf der Grundlage einer zeitlichen Änderung der Daten einen Zeitpunkt für eine Wartungsempfehlung für die Werkzeugmaschine (100, 100A, 100B) zu berechnen, und
wobei die Diagnosevorrichtung (8) dazu eingerichtet ist, um den Zeitpunkt für die Wartungsempfehlung auf der Anzeigeeinrichtung (84) anzuzeigen.

9. Werkzeugmaschine (100, 100A, 100B) nach einem der Ansprüche 1 bis 7, ferner umfassend eine Anzeigevorrichtung (84),
wobei die Diagnosevorrichtung (8) dazu eingerichtet ist, um auf der Anzeigevorrichtung (84) eine erste Warnmeldung anzuzeigen, in einem Fall, in dem die Abweichung der Daten von den Referenzdaten (ND1, ND2, ND3) einen ersten zulässigen Bereich überschreitet und in einen zweiten zulässigen Bereich fällt, und
wobei die Diagnosevorrichtung (8) dazu eingerichtet ist, um auf der Anzeigevorrichtung eine zweite Warnmeldung anzuzeigen, in einem Fall, in dem die Abweichung der Daten von den Referenzdaten (ND1, ND2, ND3) den zweiten zulässigen Bereich überschreitet.

10. Diagnoseverfahren für eine Werkzeugmaschine (100, 100A, 100B), wobei das Diagnoseverfahren umfasst:
einen Schritt (ST1) des Vorbereitens eines Diagnosewerkzeugs (9, 9A, 9B), das einen Sensor (91, 91a, 91b) aufweist, wobei das Diagnosewerkzeug (9, 9A, 9B) an einer Werkzeugspindel (2) der Werkzeugmaschine (100, 100A, 100B) anbringbar ist, wobei das Diagnosewerkzeug (9, 9A, 9B) durch eine andere Werkzeugtransfervorrichtung (3) als die Werkzeugspindel (2) übertragbar ist, wobei die Werkzeugtransfervorrichtung (3) einen automatischen Werkzeugwechsler (30) aufweist;
einen Schritt (ST2) des Übertragens des Diagnosewerkzeugs (9, 9A, 9B) durch die Werkzeugtransfervorrichtung (3);
ein Schritt (ST3) des Erfassens, durch den Sensor (91, 91a, 91b), einer physikalische Größe, die auf das Diagnosewerkzeug (9, 9A, 9B) wirkt, wenn das Diagnosewerkzeug (9, 9A, 9B) von der Werkzeugtransfervorrichtung (3) übertragen wird; und
einen Schritt (ST5) des Diagnostizierens des Vorliegens oder Nichtvorliegens einer Anomalie in der Werkzeugmaschine (100, 100A, 100B) auf der Grundlage der vom Sensor (91, 91a, 91b) erfassten physikalischen Größe, wenn das Diagnosewerkzeug (9, 9A, 9B) von der Werkzeugtransfervorrichtung (3) übertragen wird,
wobei die physikalische Größe mindestens eines der Folgenden umfasst:
erste Beschleunigungsdaten (DA1), die die Beschleunigung angeben, die auf das Diagnosewerkzeug (9, 9A, 9B) wirkt, wenn das Diagnosewerkzeug (9, 9A, 9B) zwischen dem automatischen Werkzeugwechsler (30) und der Werkzeugspindel (2) übertragen wird; und
erste Schwingungsdaten (DB1), die die Schwingungen angeben, die auf das Diagnosewerkzeug (9, 9A, 9B) wirken, wenn das Diagnosewerkzeug (9, 9A, 9B) zwischen dem automatischen Werkzeugwechsler (30) und der Werkzeugspindel (2) übertragen wird, und
wobei der Schritt des Diagnostizierens umfasst, dass mindestens eines von den ersten Beschleunigungsdaten (DA1) und den ersten Schwingungsdaten (DB1) analysiert wird, um das Vorliegen oder Nichtvorliegen einer Ausrichtungsanomalie zwischen dem automatischen Werkzeugwechsler (30) und der Werkzeugspindel (2) zu diagnostizieren.

## Revendications

1. Machine-outil (100, 100A, 100B) comprenant :
une broche d'outil (2) capable de tenir un outil de diagnostic (9, 9A, 9B) comportant un capteur (91, 91a, 91b) ;
un appareil de transfert d'outil (3) prévu séparément de la broche d'outil (2), l'appareil de transfert d'outil (3) étant capable de transférer l'outil de diagnostic (9, 9A, 9B), l'appareil de transfert d'outil (3) comportant un changeur automatique d'outil (30) ; et
un appareil de diagnostic (8) configuré pour recevoir, depuis le capteur (91, 91a, 91b), des données indiquant une grandeur physique agissant sur l'outil de diagnostic (9, 9A, 9B) lorsque l'outil de diagnostic (9, 9A, 9B) est transféré par l'appareil de transfert d'outil (3), et configuré pour analyser les données afin de diagnostiquer la présence ou l'absence d'une anomalie dans la machine-outil (100, 100A, 100B),
dans laquelle les données comprend au moins une parmi :
des premières données d'accélération (DA1) indiquant l'accélération qui agit sur l'outil de diagnostic (9, 9A, 9B) lorsque l'outil de diagnostic (9, 9A, 9B) est transféré entre le changeur automatique d'outil (30) et la broche d'outil (2) ; et
des premières données de vibration (DB1) indiquant la vibration qui agit sur l'outil de diagnostic (9, 9A, 9B) lorsque l'outil de diagnostic (9, 9A, 9B) est transféré entre le changeur automatique d'outil (30) et la broche d'outil (2), et
dans laquelle l'appareil de diagnostic (8) est configuré pour analyser au moins une parmi les premières données d'accélération (DA1) et les premières données de vibration (DB1) afin de diagnostiquer la présence ou l'absence d'une anomalie d'alignement entre le changeur automatique d'outil (30) et la broche d'outil (2).

2. Machine-outil (100, 100A, 100B) selon la revendication 1,
dans laquelle les données comprennent des premières données indiquant une grandeur physique détectée par le capteur (91, 91a, 91b) lorsque l'outil de diagnostic (9, 9A, 9B) est transféré entre l'appareil de transfert d'outil (3) et la broche d'outil (2), et
dans lequel l'appareil de diagnostic (8) est configuré pour analyser les premières données afin de diagnostiquer la présence ou l'absence de l'anomalie dans la machine-outil (100, 100A, 100B).

3. Machine-outil (100, 100A, 100B) selon la revendication 1 ou 2,
dans laquelle les premières données d'accélération (DA1) comprennent des données d'accélération latérale (DAx), qui sont des données d'accélération de l'outil de diagnostic (9, 9A, 9B) dans une direction perpendiculaire à une direction longitudinale de l'outil de diagnostic (9, 9A, 9B), et
dans laquelle l'appareil de diagnostic (8) est configuré pour diagnostiquer la présence ou l'absence de l'anomalie d'alignement, sur la base au moins des données d'accélération latérale (DAx).

4. Machine-outil (100, 100A, 100B) selon une des revendications 1 à 3,
dans laquelle les premières données d'accélération (DA1) comprennent des données d'accélération axiale (DAz), qui sont des données d'accélération de l'outil de diagnostic (9, 9A, 9B) dans une direction parallèle à une direction longitudinale de l'outil de diagnostic (9, 9A, 9B), et
dans laquelle l'appareil de diagnostic (8) est configuré pour diagnostiquer la présence ou l'absence de l'anomalie d'alignement, sur la base au moins des données d'accélération axiale (DAz).

5. Machine-outil (100, 100A, 100B) selon une des revendications 1 à 4,
dans laquelle l'appareil de diagnostic (8) est configuré pour analyser une fréquence de vibration de l'outil de diagnostic (9, 9A, 9B) dans une direction parallèle à une direction longitudinale de l'outil de diagnostic (9, 9A, 9B), sur la base d'au moins une parmi les premières données d'accélération (DA1) et les premières données de vibration (DB1), et
dans laquelle l'appareil de diagnostic (8) est configuré pour diagnostiquer la présence ou l'absence de l'anomalie d'alignement, sur la base d'un résultat d'analyse de la fréquence de vibration.

6. Machine-outil (100, 100A, 100B) selon une des revendications 1 à 5,
dans laquelle les données comprennent des données de vitesse angulaire (DC) indiquant une vitesse angulaire qui agit sur l'outil de diagnostic (9, 9A, 9B) lorsque l'outil de diagnostic (9, 9A, 9B) est transféré par l'appareil de transfert d'outil (3), et
dans lequel l'appareil de diagnostic (8) est configuré pour analyser les données de vitesse angulaire (DC) afin de diagnostiquer la présence ou l'absence de l'anomalie dans l'appareil de transfert d'outil (3).

7. Machine-outil (100, 100A, 100B) selon une des revendications 1 à 6, comprenant en outre un magasin d'outil (4),
dans laquelle les données comprend au moins une parmi :
des secondes données d'accélération (DA2) indiquant l'accélération qui agit sur l'outil de diagnostic (9, 9A, 9B) lorsque l'outil de diagnostic (9, 9A, 9B) est transféré entre l'appareil de transfert d'outil (3) et le magasin d'outil (4) ; et
des secondes données de vibration (DB2) indiquant la vibration qui agit sur l'outil de diagnostic (9, 9A, 9B) lorsque l'outil de diagnostic (9, 9A, 9B) est transféré entre l'appareil de transfert d'outil (3) et le magasin d'outil (4), et
dans laquelle l'appareil de diagnostic (8) est configuré pour analyser au moins une parmi les secondes données d'accélération (DA2) et les secondes données de vibration (DB2) afin de diagnostiquer la présence ou l'absence d'une anomalie d'alignement entre l'appareil de transfert d'outil (3) et le magasin d'outil (4).

8. Machine-outil (100, 100A, 100B) selon une des revendications 1 à 7, comprenant en outre un dispositif d'affichage (84),
dans laquelle l'appareil de diagnostic (8) est configuré pour calculer le moment de recommandation d'entretien de la machine-outil (100, 100A, 100B), sur la base d'un changement temporel des données, et
dans laquelle l'appareil de diagnostic (8) est configuré pour afficher le moment de recommandation d'entretien sur le dispositif d'affichage (84).

9. Machine-outil (100, 100A, 100B) selon une des revendications 1 à 7, comprenant en outre un dispositif d'affichage (84),
dans laquelle l'appareil de diagnostic (8) est configuré pour afficher une première alerte sur le dispositif d'affichage (84), dans le cas où l'écart entre les données et les données de référence (ND1, ND2, ND3) dépasse une première plage admissible et se situe dans une seconde plage admissible, et
dans laquelle l'appareil de diagnostic (8) est configuré pour afficher une seconde alerte sur le dispositif d'affichage, dans le cas où l'écart entre les données et les données de référence (ND1, ND2, ND3) dépasse la seconde plage admissible.

10. Procédé de diagnostic pour une machine-outil (100, 100A, 100B), le procédé de diagnostic comprenant :
une étape (ST1) consistant à préparer un outil de diagnostic (9, 9A, 9B) comprenant un capteur (91, 91a, 91b), l'outil de diagnostic (9, 9A, 9B) pouvant être fixé à une broche d'outil (2) de la machine-outil (100, 100A, 100B), l'outil de diagnostic (9, 9A, 9B) pouvant être transféré par un appareil de transfert d'outil (3) autre que la broche d'outil (2), dans lequel l'appareil de transfert d'outil (3) comporte un changeur automatique d'outil (30) ;
une étape (ST2) consistant à transférer l'outil de diagnostic (9, 9A, 9B) par l'appareil de transfert d'outil (3) ;
une étape (ST3) consistant à détecter, à l'aide du capteur (91, 91a, 91b), une grandeur physique qui agit sur l'outil de diagnostic (9, 9A, 9B) lorsque l'outil de diagnostic (9, 9A, 9B) est transféré par l'appareil de transfert d'outil (3) ; et
une étape (ST5) consistant à diagnostiquer la présence ou l'absence d'une anomalie dans la machine-outil (100, 100A, 100B), sur la base de la grandeur physique détectée par le capteur (91, 91a, 91b) lorsque l'outil de diagnostic (9, 9A, 9B) est transféré par l'appareil de transfert d'outil (3),
dans lequel la grandeur physique comprend au moins une parmi :
des premières données d'accélération (DA1) indiquant l'accélération qui agit sur l'outil de diagnostic (9, 9A, 9B) lorsque l'outil de diagnostic (9, 9A, 9B) est transféré entre le changeur automatique d'outil (30) et la broche d'outil (2) ; et
des premières données de vibration (DB1) indiquant la vibration qui agit sur l'outil de diagnostic (9, 9A, 9B) lorsque l'outil de diagnostic (9, 9A, 9B) est transféré entre le changeur automatique d'outil (30) et la broche d'outil (2), et
dans lequel l'étape de diagnostic comprend l'analyse d'au moins une parmi les premières données d'accélération (DA1) et les premières données de vibration (DB1) afin de diagnostiquer la présence ou l'absence d'une anomalie d'alignement entre le changeur automatique d'outil (30) et la broche d'outil (2).
